# EUROPEAN PATENT APPLICATION

(11) **EP 1 265 168 A2**
(43) Date of publication of application: **11.12.2002**
(21) Application number: 01308210.2
(22) Date of filing: 27.09.2001
(51) Int. Cl.: G06F 17/60

(54) **Method and system for processing physical distribution information**

(30) Priority: 06.06.2001 JP 2001171199
(71) Applicant: FUJITSU LIMITED, Kawasaki-shi, Kanagawa 211-8588 (JP)
(72) Inventor: Nakata, Tetsuo, c/o Fujitsu Aomori Systems, Aomori-shi, Aomori 030-0192 (JP); Matsuo, Takako, c/o Fujitsu Aomori Systems, Aomori-shi, Aomori 030-0192 (JP); Yoshikawa, Ryohichi, c/o Fujitsu Aomori Systems, Aomori-shi, Aomori 030-0192 (JP); Akagi, Atsushi, c/o Fujitsu Aomori Systems, Aomori-shi, Aomori 030-0192 (JP); Akita, Norihiko, c/o Fujitsu Aomori Systems, Aomori-shi, Aomori 030-0192 (JP); Iida, Noboru, c/o Fujitsu Aomori Systems, Aomori-shi, Aomori 030-0192 (JP); Kudo, Takeshi, c/o Fujitsu Aomori Systems, Aomori-shi, Aomori 030-0192 (JP); Shitamori, Takayuki, c/o Fujitsu Aomori Systems, Aomori-shi, Aomori 030-0192 (JP); Yugami, Takashi, c/o Fujitsu Aomori Systems, Aomori-shi, Aomori 030-0192 (JP)
(74) Representative: Fenlon, Christine Lesley

(57) **Abstract**

Schedule information regarding a form of receiving (for example, "not available for receiving", "available for receiving", "forward", "kept until called for") a package addressed to the member is received from a terminal (5) of a member and then is registered in a storage device (33). Further, a delivery form (for example, deliverable or not deliverable for "not available for receiving") is determined with reference to at least the receiver's schedule stored in the storage device (33) if the receiver is a member. Then, delivery request information for the distributor is generated in accordance with the delivery form if the determined delivery form involves a movement of the package. Accordingly, since a member registers his form of package receiving by himself in advance, he can receive the package in accordance with his schedule. That is, the distribution is performed in accordance with the receiver's schedule more, which allows better efficiency.

## Description

The present invention relates to a method and system for processing physical distribution information.

Previously, in a physical distribution, information required for the physical distribution occurs when a sender requests the physical distribution. That is, distributors adopt a method for collecting and processing required physical distribution information while delivering packages on the assumption that a physical distribution occurs every time the physical distribution is requested. Thus, inefficient situations occur frequently such as one that a distributor brings back a package when the receiver is not available and re-delivers it later again. Furthermore, the distributor cannot communicate with the receiver during on his journey. Therefore, a lot of time are consumed because the distributor must try to call or deliver the package many times.

Thus, Laid-Open Publication 2000-48074 discloses a technology for confirming with the receiver before delivering a package and, when a change in the place and/or time of receipt is informed by the receiver, delivering the package to the instructed place and/or instructed time. However, according to the technology, since a distributor asks the receiver for instructions on the place and/or time of receipt every time the distributor receives a request for the distribution, the same condition as previously occurs when the receiver cannot receive the notice before the instruction request notice is sent to the receiver. Further, in this case, it is impossible to provide information that suggests the sender not to send the package. Still further, there is no incentive for receivers to help the distributors.

Accordingly, it is desirable to provide an information processing technology for achieving more efficient physical distribution.

It is also desirable to provide a sender with information regarding more proper delivery.

Furthermore, it is desirable to provide an information processing technology for providing incentive for achieving more efficient physical distribution.

A method for processing physical distribution information, embodying a first aspect of the present invention, includes the steps of: receiving, from a terminal of a member, schedule information regarding a form of receiving (for example, "not available for receiving", "available for receiving", "forward", "kept until called for" a package addressed to the member and registering it into a storage device; determining a delivery form (for example, deliverable for "available for receiving", "forward", or "kept until called for" and "undeliverable" for "not available for receiving" in the planed delivery date and time) with reference to at least receiver's schedule information stored in the storage device if the receiver is a member, if a shipment request is received from a terminal of a sender of a package; and generating delivery request information for a distributor in accordance with the delivery form determined in the determining step if the delivery form involves a movement of the package.

Accordingly, a member registers his/her form of package receiving by him/her in advance. Thus, he/she can receive the package in accordance with his schedule. Further, unlike the conventional technology, since the receiver inputs his/her schedule by himself/herself, no circumstance where he/she cannot receive an instruction request notice. That is, the physical distribution is performed in accordance with the receiver's schedule more, which allows better efficiency.

In addition, the method may further include a step of registering scheduled delivery information in the receiver's schedule information if the delivery form determined in the above-described determining step involves a movement of the package. The receiver may receive a delivery notice, or may access to a center server to browse a delivery schedule.

Still further, the method may further include a step of sending information regarding the delivery form determined in the determining step (for example, "delivery schedule", "Undeliverable notice", "receiving denial") before starting to deliver the package. Thus, a sender can obtain information on possibilities of the delivery, such as possible or impossible. When undeliverable, information regarding the time to be available may be provided to the sender. Therefore, if information regarding undeliverable or receiving denial is provided to the sender before starting the delivery, wasteful deliveries are eliminated, which increases the efficiency in total.

Further, the method may includes a step of receiving a delivery completion notice including receiving status data from a distributor's computer and then registering it in a storage device. The receiving status data is information that the delivery was completed in accordance with the planned delivery date and time included in the delivery form, the re-delivery was required, or the package was returned. By using such receiving status data, the delivery completion notice can be generated for the sender.

Further, the method may includes a step of giving a predetermined point to a receiver if the receiving status data included in the delivery completion notice indicates the package was received properly in accordance with the delivery schedule specified in the delivery form. This configuration can provide the receiver with incentive for registering his/her schedule information. Thus, more accurate schedule information is entered, allowing more efficient physical distribution.

A method for processing physical distribution information in a sender's terminal, embodying a second aspect of the present invention, includes the steps of: sending, to a central server, a request for delivering a package specifying at least a receiver; and receiving a result notice of delivery scheduling, which may be undeliverable, from the central server before starting to deliver the package. Thus, the sender can be informed of the result of the delivery scheduling in advance, so that he/she does not have to make an unnecessary delivery request.

Incidentally, the above-described method for processing physical distribution information can be implemented by creating a dedicated program, which will be installed into computer hardware. In this case, the program is stored in a memory medium or a memory device such as a flexible disk, a CD-ROM, an optical disk, a semiconductor memory, and a hard disk. Further, it may be distributed through a network, for example. An intermediate processing result is stored in a memory temporally.

Reference will now be made, by way of example, to the accompanying drawings, in which:
Fig. 1 is a diagram showing an outline of a processing flow according to one embodiment of the present invention;
Fig. 2 is a diagram showing a system outline according to one embodiment of the present invention;
Fig. 3 is a diagram showing one example of a member file;
Fig. 4 is a diagram showing one example of member information entering screen;
Fig. 5 is a diagram showing one example of member schedule information;
Fig. 6 is a diagram showing one example of a receiving form specifying schedule file;
Fig. 7 is a diagram showing one example of a schedule registration/confirmation screen;
Fig. 8a is a diagram showing a first example of a schedule registration/confirmation screen on a mobile telephone;
Fig. 8b is a second diagram of a schedule registration/ confirmation screen on a mobile phone;
Fig. 8c is a diagram showing one example of a pull down menu in the screen shown in Fig. 8b;
Fig. 9a is a diagram showing one example of receiving patterns when receipt of a package is possible all day;
Fig. 9b is a diagram showing one example of receiving patterns when receipt of a package is possible only during night;
Fig. 9c is a diagram showing one example of receiving patterns when a package is kept all day until called for;
Fig. 10 is a diagram showing one example of my template setting screen;
Fig. 11 is a diagram showing one example of a receiving denial setting screen;
Fig. 12 is a diagram showing one example of a family setting screen;
Fig. 13 is a diagram showing one example of family setting file;
Fig. 14 is a diagram showing an outline of processing when another family member receives the package;
Fig. 15 is a diagram showing one example of a member information entering screen;
Fig. 16 is a diagram showing one example of a request receiving file;
Fig. 17 is a diagram showing one example of a shipment request screen;
Fig. 18 is a diagram showing one example of a distribution request information file;
Fig. 19 is a diagram showing one example of a history file;
Fig. 20 is a diagram showing one example of a point file;
Fig. 21 is a diagram showing an outline of a processing flow when the schedule of a receiver indicates "available for receiving";
Fig. 22 is a diagram showing one example of a receiving bill to be sent to the sender when the delivery is possible;
Fig. 23 is a diagram showing one example of a confirmation information entering screen;
Fig. 24 is a model diagram for describing processing in a request receiver and a schedule checking unit when the schedule of a receiver indicates "available for receiving";
Fig. 25 is a model diagram for describing processing in the request receiver when the schedule of a receiver indicates "available for receiving";
Fig. 26 is a model diagram for describing processing in the request receiver and the schedule checking unit when the schedule of a receiver indicates "available for receiving";
Fig. 27 is a model diagram for describing processing in the request receiver when the schedule of a receiver indicates "available for receiving";
Fig. 28 is a conceptual diagram of a processing flow when the schedule of a receiver indicates "non-availability for receiving";
Fig. 29 is a diagram showing one example of a receiving bill to be set to a sender when the delivery is not possible;
Fig. 30 is a model diagram for describing processing in the request receiver and the schedule checking unit when the schedule of a receiver indicates "non-availability for receiving";
Fig. 31 is a conceptual diagram of a processing flow when the schedule of a receiver indicates "forward";
Fig. 32 is a model diagram for describing processing in the request receiver and the schedule checking unit when the schedule of a receiver indicates "forward";
Fig. 33 is a model diagram for describing processing in the request receiver when the schedule of a receiver indicates "forward";
Fig. 34 is a conceptual diagram of a processing flow when the schedule of a receiver indicates "kept until called for";
Fig. 35 is a model diagram for describing processing in the request receiver and the schedule checking unit when the schedule of a receiver indicates "kept until called for";
Fig. 36 is a model diagram for describing processing in the request receiver when the schedule of a receiver indicates "kept until called for";
Fig. 37 is a conceptual diagram of a processing flow when the schedule of a receiver indicates "not fixed";
Fig. 38 is a diagram showing one example of a receiving bill to be sent to a sender when the receiver's schedule indicates "not fixed";
Fig. 39 is a diagram showing one example of schedule entering request to be sent to the receiver when the schedule of the receiver indicates "not fixed";
Fig. 40 is a model diagram for describing processing in the request receiver and the schedule checking unit when the schedule of a receiver indicates "not fixed";
Fig. 41 is a conceptual diagram of a processing flow when the schedule of a receiver indicates "not fixed" and a request for forced shipment is performed;
Fig. 42 is a conceptual diagram of a processing flow of a request for sending to a non-member;
Fig. 43 is a diagram showing one example of a sending bill addressed to a non-member;
Fig. 44 is a model diagram for describing processing in the request receiver when the request for sending to the non-member is received;
Fig. 45 is a model diagram for describing processing in the registration processor when the request for sending to the non-member is received;
Fig. 46 is a diagram showing one example of a simplified membership application screen;
Fig. 47 is a conceptual diagram of point adding processing when the schedule of the receiver indicates "available for receiving";
Fig. 48 is a model diagram for describing a distribution cost with forwarding;
Fig. 49 is a conceptual diagram of point adding processing when the receiver is a non-member;
Fig. 50 is a diagram showing a flow of schedule registration processing;
Fig. 51 is a diagram showing a flow of shipment request processing;
Fig. 52 is a diagram showing a first flow of schedule checking processing;
Fig. 53 is a diagram showing a second flow of schedule checking processing;
Fig.54a is a diagram for describing checking orders when the receiver is a householder and another family member is available for receiving;
Fig.54b is a diagram for describing checking orders when the receiver is a family member 2 and another family member is available for receiving;
Fig. 55 is a diagram showing a flow of distribution request information generating processing;
Fig. 56 is a diagram showing a flow of checking information entering processing; and
Fig. 57 is a diagram showing a processing flow for simplified membership registration.

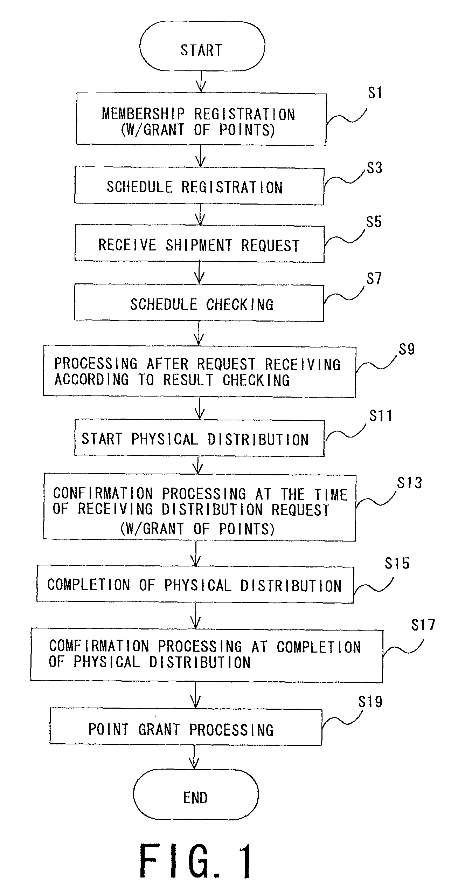

First of all, an outline of processing and procedures according to one embodiment of the present invention will be described with reference to Fig. 1. In this embodiment, both sender and receiver need the membership registration first (step S1). Here, a name, an address, and e-mail address, and so on are registered. The details will be described later. Incidentally, the receiver does not have to be a member. However, since the delivery schedule cannot be arranged properly without the registration, merits with this embodiment cannot be provided. Once the membership registration is completed, a new membership point may be given. Further, if the receiver is a non-member and the non-member registers for the membership, a new membership point may be given to the sender, too, for his introduction.

Next, the member registers the schedule information regarding a form of receiving packages addressed to himself/herself (step S3). The form of package receiving includes, for example, "not available for receiving", "available for receiving", "forward", and "keep until called for". This will be also described later in detail. In this embodiment, a member registers his/her schedule information in advance such that, whenever a package addressed to himself/herself is sent, a proper form of package receiving can be determined before the actual package is moved. Then, a distribution information center receives, from a member sender, a shipment request including receiver information and information such as desired delivery date and time and performs the processing therefore, (step S5). This processing will be also described later in detail.

Then, the distribution information center performs processing for schedule checking for the receiver and so on for the received shipment request (step S7). The schedule checking may be performed on not only the receiver but also the receiver's family members who live with the receiver, and so on. A delivery form is determined based on the schedule checking. That is, matters such as "is it deliverable?", "is it not deliverable?", "is it forwarded?", "is it kept until called for?", "when is the scheduled delivery date and time?" are determined. Further, in this step, that the schedule has not been fixed is also identified. In addition, whether or not the receiver denies the package receiving is also determined.

Once the schedule checking is completed, the distribution information center performs processing after the request receiving in accordance with the checking result (step S9). For example, if it is deliverable including a case of "forward" or "kept until called for", distribution request information is sent to the distributor and a notice regarding the delivery acceptance is sent to the sender. If it is not deliverable, a notice regarding "not deliverable" is sent to the sender.

If it is deliverable including a case of "forward" or "kept until called for", a distribution request is sent to the distributor. Thus, the distributor starts the distribution by collecting a package from the sender or by receiving a package brought by the sender (step S11). Further, the distributor performs confirmation processing at the time of receiving the distribution request (step S13). The confirmation processing determines a delivery charge based on, for example, actual weight and size of the package, and it is informed to the distribution information center. Incidentally, if it is deliverable, points for shipment may be given to the sender here, for example. Then, the distributor delivers the package to a designated receiving place (the receiver's home, forwarding place, or keeping place) and completes the physical distribution (step S15).

Further, the distributor performs confirmation processing at the completion of the physical distribution (step S17). The confirmation processing at this stage is processing for sending, to the distribution information center, a delivery completion notice including receiving status data, delivery date, delivery time zone, and so on. The receiving status data includes information such as "does the delivery follow the delivery plan based on the delivery form determined in the step S7?", "was the package redelivered?", or "was the package returned?".

Then, in accordance with the receiving status data obtained from the distributor, the distribution information center performs point grant processing on the receiver (step S19). In this embodiment, as incentive for the members to register their schedule information, points are given to the member receiver if the delivery form is determined in accordance with the registered schedule information and the delivery completes by following the delivery plan based on the delivery form. If the delivery completes in accordance with the delivery plan, the distributor's works becomes more efficient. Therefore, portion of the reduction of costs is returned to the receiver. Incidentally, points may be also given for the forwarding or kept until called for.

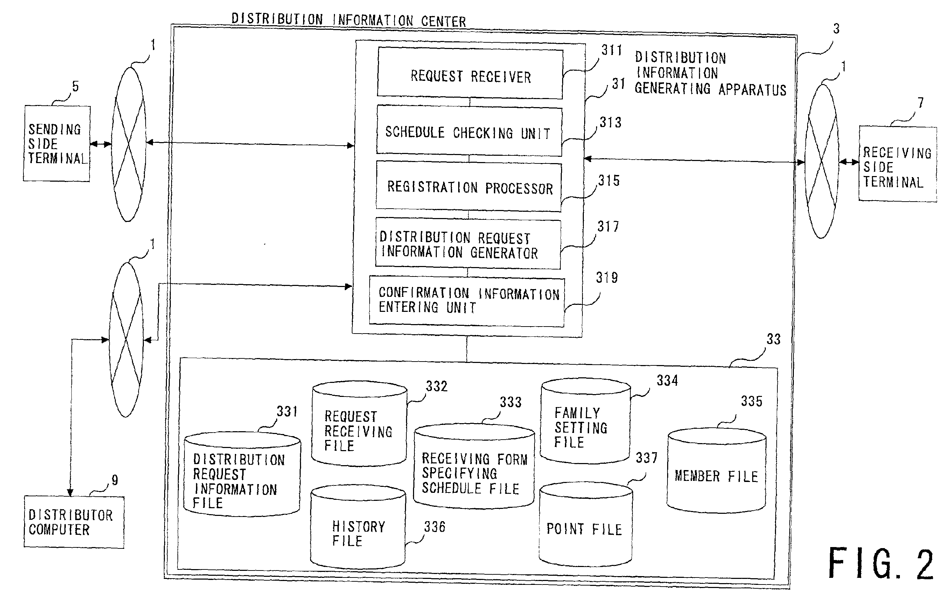

Details of the processing as described above will be described with reference to Fig. 2 and following figures.

An outline of a system in this embodiment is shown in Fig. 2. A distribution information generating apparatus 3 is provided in the distribution information center. A sending side terminal 5 operated by a sender, a receiver side terminal 7 operated by a receiver, and a distributor computer 9 administrated and operated by a distributor are connected to a distribution information generating apparatus 3 through a network 1 such as a public switched network and the Internet. The sending side terminal 5 and the receiving side terminal 7 may be, for example, a mobile phone, a Personal Data Assistance (PDA), a personal computer, or a digital television, and may have a Web browser function, for example. The distributor computer 9 may not be a single computer but computers connected to each branch of the distributor, or may include mobile terminals carried by pick-up drivers.

The distribution information generating apparatus 3 includes a processor 31 and a data storage device 33. The processor 31 includes a request receiver 311 for receiving and processing shipment requests, a schedule checking unit for determining a delivery form with reference to schedule information of a member receiver, a registration processor 315 for performing processing for registering member information and/or processing for registering member's schedule information, and a distribution request information generator 317 for generating distribution request information to the distributor computer 9, and the confirmation information entering unit 319 for processing confirmation information and so on from the distributor computer 9.

Further, the data storage device 33 includes a distribution request information file 331 for storing distribution request information sent to the distributor computer 9, a request receiving file 332 for storing information regarding a shipment request received from the sending side terminal 5, a receiving form specifying schedule file 333 for storing a form of receiving a package addressed to him/her registered by each member, a family setting file 334 for storing information regarding family members of each member, a member file 335 for storing member information a history file 336 for storing a processing history, and a point file 337 for storing information regarding points obtained by each member.

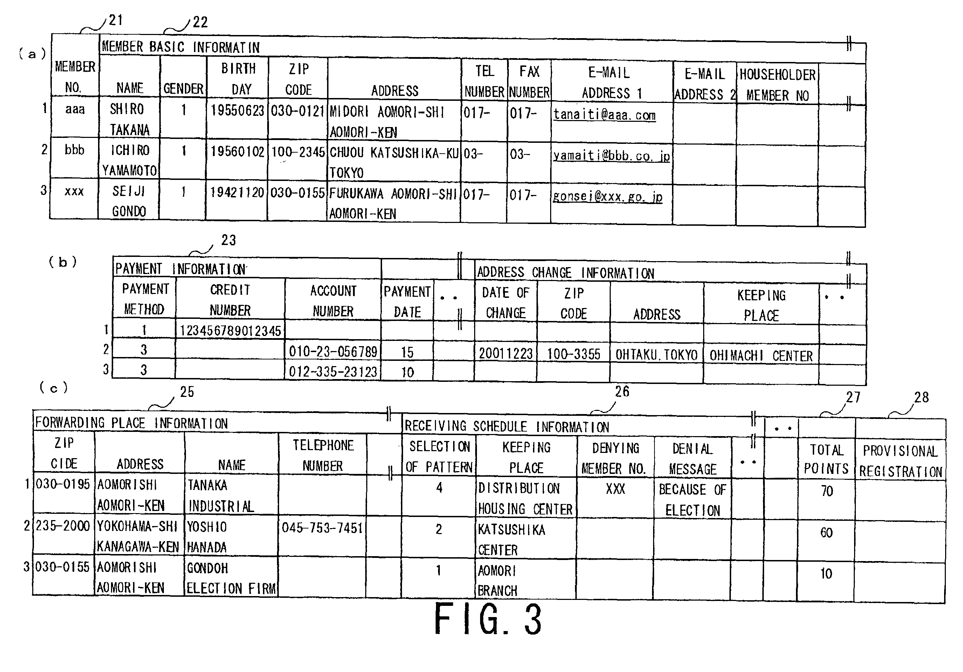

One example of data stored in the member file 335 for storing member information is shown in Fig. 3. (a) portion in Fig. 3 includes a member number (No.) column 21 and a member basic information column 22. In this example, three members are registered, and three member numbers, that is, aaa at the first row, bbb at the second row, xxx at the third row are shown. The member basic information includes each column of name, gender (1:male, 2:female), birthday, zip code, address, telephone number, FAX number, e-mail address 1, e-mail address 2, householder member number (No.). In this example, member basic information for three people, that is, Shiro Tanaka, Ichiro Yamamoto, and Seiji Gondo. The e-mail address column may be just one. In this embodiment, a householder member number is not registered for a member who is a householder.
(b) portion in Fig. 3 includes a payment information column 23, and an address change information column 24. The payment information may include each column of, for example, a payment method, a credit card number, a bank account number, and a payment date. For the payment information, in this example, 1, 2, and 3 indicate payment by a credit card, payment at a convenience store, and bank wire-transferring, respectively. Since the first row specifies the payment by a credit card, a credit card number is registered. Since the second and third rows specify payment by bank wire-transferring, bank account numbers are registered. The address change information is information registered by a member when he or she knows in advance that an address change will be occurred due to a move and so on. Therefore, in this example, the information is registered for the member at the second row who is expecting the occurrence of an address change. The address change information includes each column of date of change, zip code, address, and keeping place. Accordingly, if the address change information is registered so that packages can be delivered to a new address from the registered date of change. The keeping place is a place specified when the receiver picks up the package addressed himself/herself at a delivery center or the like.
(c) portion in Fig. 3 includes a forwarding place information column 25, a receiving schedule information column 26, total point column 27, a "provisional registration" flag column 28, and so on. The forwarding place information includes each column of zip code, address, name, telephone number, and so on. This is used when a package is desired to forward when the receiver is absent. The registration is optional. The receiving schedule information includes each column of selection of pattern, keeping place, a denying member number, denial message, and so on. The selection of pattern is information of the selection of typical patterns in order to simplify schedule information setting. For example, it is either one of 1, 2, 3, and 4, that is, a pattern for a full-time housewife who can receive a package all day, a pattern for a double-income family who can receive a package only during night, a pattern for a single who detains all day, and a my-template for which each member registers a pattern individually for use, respectively, the registration of the keeping place is also optional. The denying member number is a member number of a sender who denies receiving a package when he/she is specified as a receiver. The denial message is a message to be notified at the time of denial. The total point is the total of points given to each member. The registration of the denying member number and the denial message is optional, and, in this example, only the member at the first row has registered. The "provisional registration" flag is a flag for, if a non-member is specified as a receiver, identifying whether or not he or she is the person registered temporally based on information input by the sender.

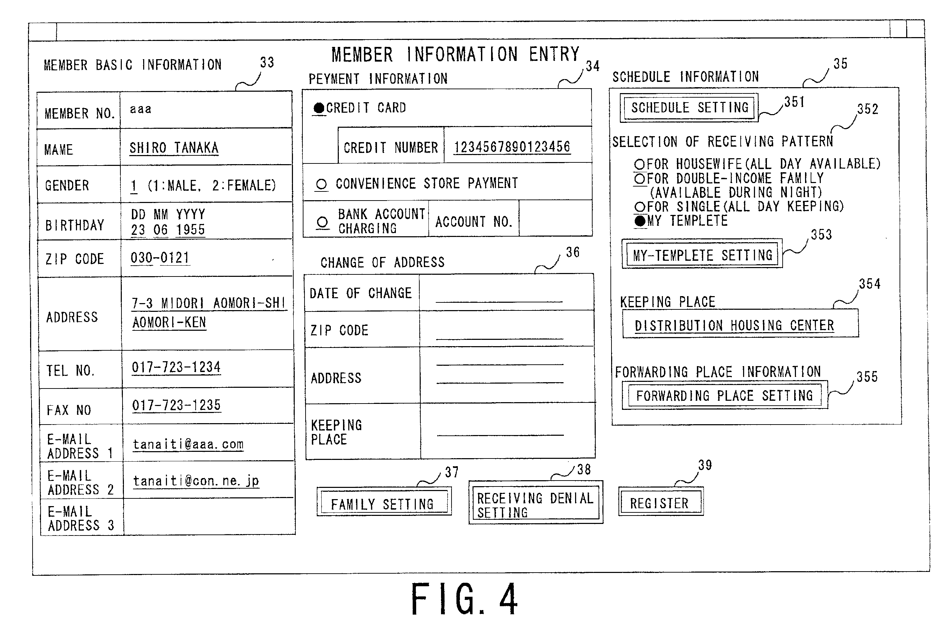

When accessed from a terminal of a user who desires registration of member information, the registration processor 315 sends information for a member information entering screen to the terminal of the user. Then, the terminal of the user displays a screen as shown in Fig. 4, for example, on a display device. The member information entering screen shown in Fig. 4 includes a member basing information entering field 33, a payment information entering field 34, a schedule information entering field 35, an address change information entering field 36, a family setting button 37, a receiving denial setting 38, and a registration button 39. The member basic information entering field 33 includes a member number field specified automatically at the side of the distribution information generating apparatus 3, a name field, a gender field, a birthday field, a zip code field, an address field, a telephone number field, a FAX number field, e-mail address 1 field, e-mail address 2 field, and e-mail address 3 field. When the registration button 39 is clicked by a user, information entered in the member basic information entering field 33 is sent from a terminal of the user to the registration processor 315, and stored in a member basic information column 22 of the member file 335 in Fig. 3 by the registration processor 315.

A radio button provided in the payment information entering field 34 for selecting one from among a credit card, a convenience store payment indicating payment at a convenience store, and bank account charging indicating bank wire-transferring. Further, a field for entering a credit card number when the credit card payment is selected and a field for entering a bank account number when the bank account changing is selected are provided. Information entered in the payment information entering column 34 is stored in a payment information column 23 of the member file 335 in Fig. 3 by the registration processor 315 when it is sent from the terminal of the user to the registration processor 315.

A changed date entering field, a zip code entering field, an address entering field, and a keeping place entering field are provided in the address change information entering column 36. Information input in the address change information input column 36 is stored in an address change information column 24 of the member file 335 in Fig.3 by the registration processor 315 when it is sent to the registration processor 315 from a terminal of a user.

The schedule information entering column 35 includes a schedule setting button 351 for moving to a schedule setting screen, a receiving pattern selecting portion 352 including a radio button for selecting one from among a housewife receiving pattern, a double-income receiving pattern, a single receiving pattern, a my-template whereby receiver sets a pattern by himself and uses it, a my-template setting button 353 for moving to a screen for setting a my-template, a keeping place entering field 354, and a forwarding place setting button 355 for moving to a screen for specifying where a package is forwarded. The result of selection by the receiving pattern selecting portion 352 and the entered information in the keeping place entering field 354 are stored, by the registration processor 315, in a pattern selection column of and in a keeping place column, respectively, of the receiving schedule information column 26 of the member file 335 in Fig. 3 when they are sent from a terminal of a user to the registration processor 315. Though not shown, fields for entering a zip code, an address, a name, a telephone number, and so on, of the place the package is forwarded are provided on a screen for setting the place where the package is forwarded. Once information entered in these fields are stored in the forwarding place information column 26 of the member file 335 in Fig. 3 by the registration processor 315 when it is sent from a terminal of a user to the registration processor 315.

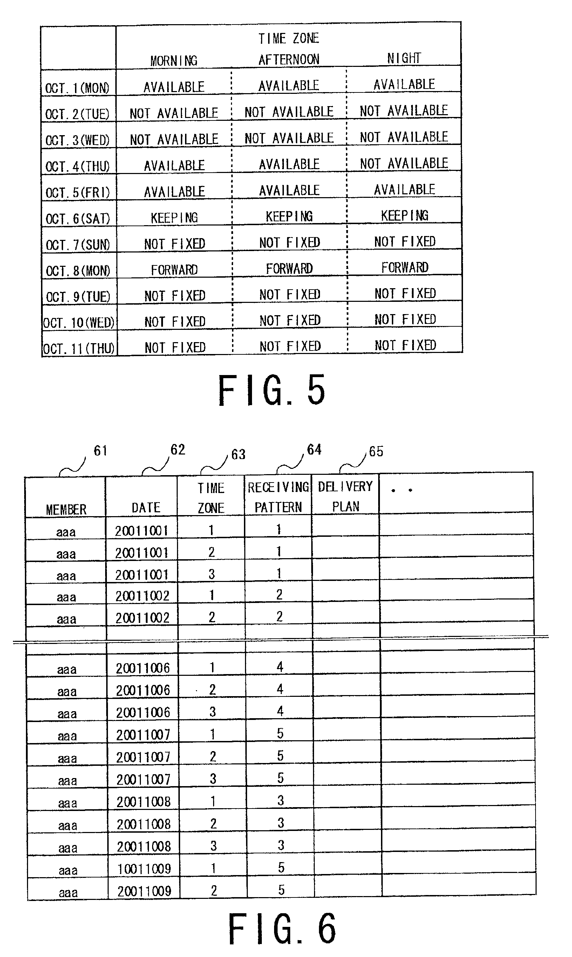

One example of forms of receiving a package addressed to a member with a member number aaa is shown in Fig. 5. In this example, the "available for receiving" shown as simply "available", "not available for receiving shown as simply "not available", "forward", "kept until called for" shown as simply "keeping"" or "not fixed" can be set for each time zone including morning, afternoon, and night for everyday. The "available for receiving" indicates a case where a member is at home and is available for receiving. The "not available for receiving" indicates a case where a member is not at home and is not available for receiving. The "forward" indicates a case where a package to be delivered is desired to be forwarded to another place. The "kept until called for " indicates a case where the package is desired to be kept in a keeping place once and picked up later. The "not fixed" indicates a place where the receiver's schedule is not decided.

One example of data stored in the receiving form specifying schedule file 333 in the case of the form of receiving as shown in Fig. 5 is shown in Fig. 6. This file includes a member number (No.) column 61, a date column 62, a time zone column 63, a receiving pattern column 63, a flag column 65 for indicating the presence of a delivery plan. In the time zone column 63, 1 indicates "morning", 2 indicates "afternoon", and 3 "indicates" night. In the receiving pattern column 64, 1 indicates "available for receiving", 2 "not available for receiving", 3 "forward", 4 "kept until called for", and 5 indicates "not fixed". In the flag column 65 for indicating the presence of the delivery plan, if there is a delivery plan, ON is set. If not, it is turned OFF.

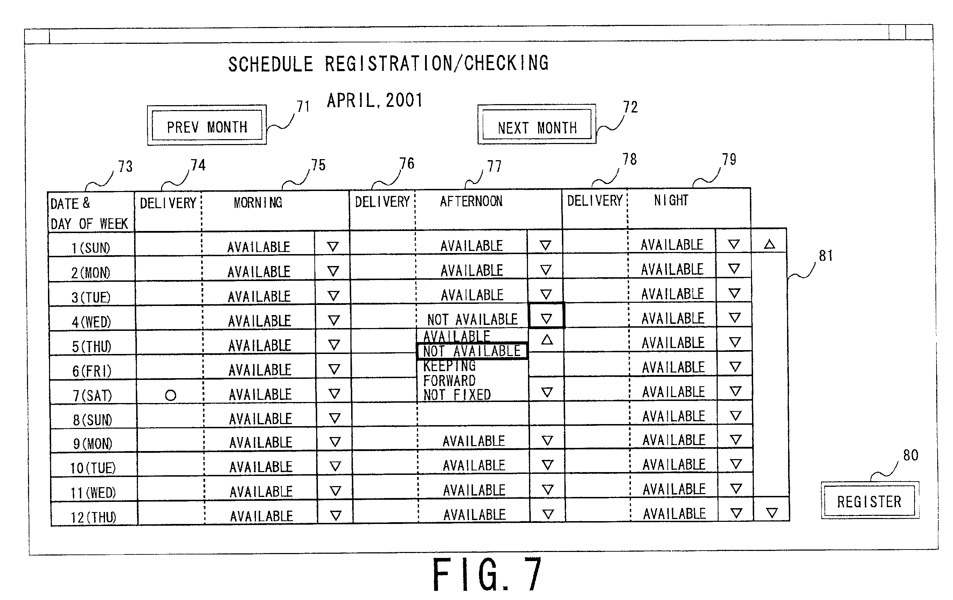

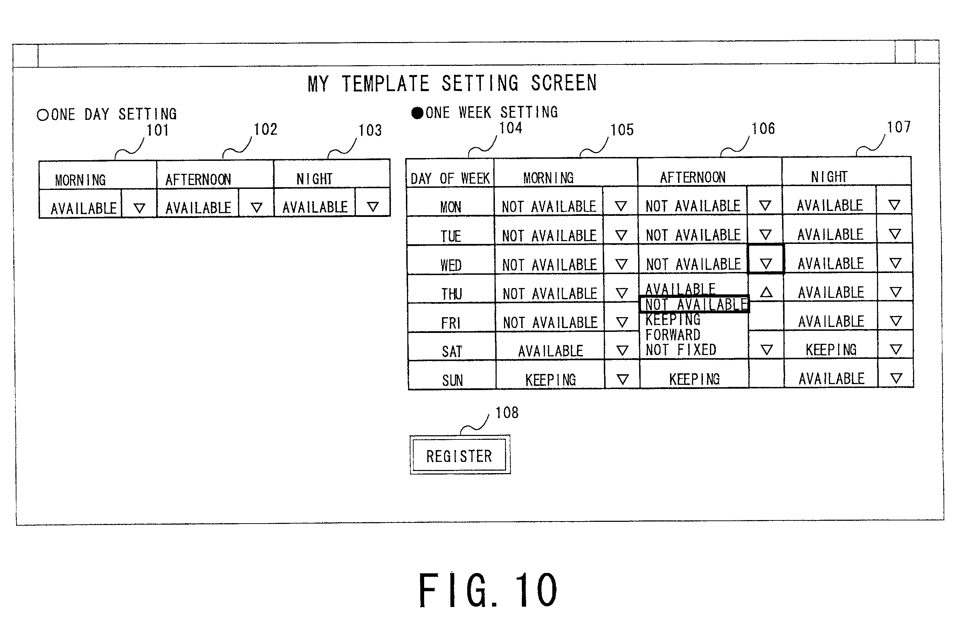

In order to register schedule information of a member in the receiving form specifying schedule file 333 as shown in Fig. 6, there are a method for performing setting in a schedule setting screen in Fig. 7, which is moved from the schedule setting button 351 on the screen shown in Fig. 4, and a method for automatically performing basic setting in accordance with the pattern selection in the receiving pattern selection portion 352. Once the my-template setting button 353 is pressed, a my-template setting screen in Fig. 10 appears, where the basic setting can be performed automatically by using the my-template set here. Further, the schedule information, on which the basic setting was performed automatically by the pattern selection in the receiving pattern selection portion 352, can be modified in the schedule setting screen moved by the schedule setting button 351.

Next, a case will be described where the schedule setting button 351 on the screen shown in Fig. 4 is clicked, then information that the schedule setting button 351 was selected is sent from a terminal of a user to the registration information processor 314, and, in response to it, the registration information processor 315 sends information for schedule registration/checking screen (for example, an HTML file and, if specified, one or a plurality of image files) to a terminal of a user. One example of this schedule registration/checking screen will be shown in Fig. 7.

The example shown in Fig. 7 is a schedule registration/checking screen on April, 2001. This screen includes a previous-month button 71 for moving to a schedule registration/checking screen on March, 2001, a next-month button 72 for moving to a schedule registration/checking screen on May, 2001, a column 73 for indicating a date and a day of the week, a delivery flag column 74 for indicating whether or not a given delivery plan is scheduled in "morning" in each date, a "morning" column 75 in which a plurality of pull-down menus for specifying a form of receiving during morning in each day are provided, a delivery flag column 76 for indicating whether or not a given delivery schedule is scheduled during afternoon in each day, an afternoon column 77 in which a plurality of pull-down menus for specifying a form of receiving during afternoon in each day, a delivery flag column 78 for indicating whether or not a delivery plan is scheduled during night in each day, a night column 79 in which a plurality of pull-down menus for specifying a form of receiving during night in each day are provided, a registration button 80 for sending input information to the registration processor 315, and a scroll-bar 81 for scrolling dates.

In the example shown in Fig. 7, it can be seen that a delivery flag during morning on 7th is ON, which indicates that a delivery plan is scheduled. Further, a given member is trying to set a form of receiving during afternoon on 4th, and "available", "not available" "keeping", "forward", and "not fixed" are displayed as options. Here, the "not available" is selected. Once the registration button 80 is clicked, the terminal of the user sends setting of the forms of receiving for one month entirely to the registration processor 315. The registration processor 315 registers the information received in the receiving form specifying schedule file 333 as shown in Fig. 6.

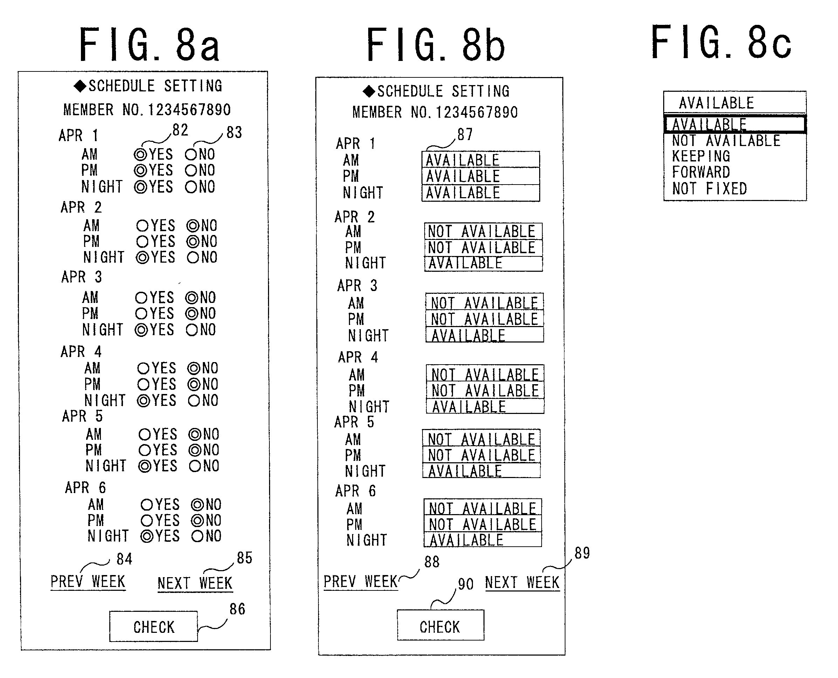

If the terminal of the user is a mobile phone, the screen shown in Fig. 7 is replaced by a screen shown in Fig. 8a or 8b, for example. Both Fig. 8a and 8b are screens for setting one week schedule. In Fig. 8a, a screen for performing easy setting, in which only "available" for receiving shown as "Yes" or "not available" for receiving shown as "No" can be specified. If the "available" for receiving is specified, a circle at a column 82 in a row of a corresponding time zone under a corresponding date is selected to change it to a double circle. If "not available", a circle at a column 83 in a row of a corresponding time zone under a corresponding date is selected to change it to a double circle. If a schedule in the previous week needs to be set/checked, the "prev week" 84 is selected. If a schedule in the next week needs to be set/checked, the "next week" 85 is selected. Then, when the setting/checking is completed, the "check" 86 is selected in order to cause the user's mobile phone to send the setting data to the registration processor 315. The registration processor 315 registers the received information in the receiving form specifying schedule file 333.

On the other hand, Fig. 8b shows an example of screen on which detailed setting of a form of receiving can be performed. That is, a pull-down menu is set for each day and each time zone, as shown in Fig. 8c, once morning of April 1st is selected, for example, a pull-down menu opens, where any one of "available", "not available", "keeping", "forward" and "not fixed" can be selected. Further, if the schedule on the previous week needs to be set/checked, the "prev week" 88 is selected. if the schedule on the next week needs to be set/checked, the "next week" 89 is selected. Then, when the setting/checking is completed, the "check" 90 is selected in order to cause the user's mobile phone to send the setting data to the registration processor 315. The registration processor 315 registers the received information in the receiving form specifying schedule file 333.

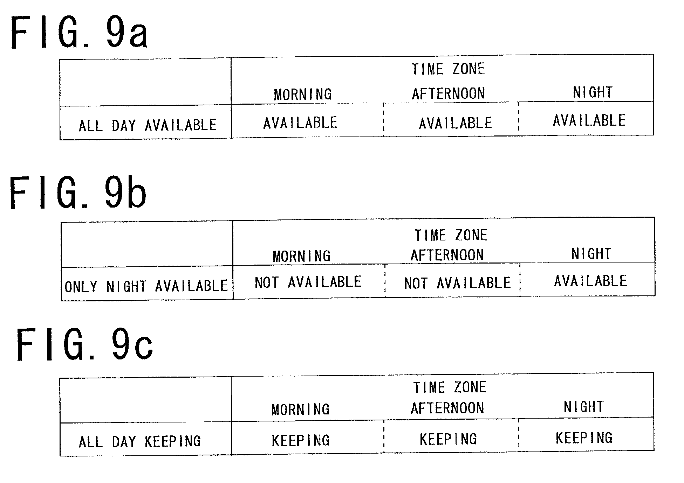

If, in the receiving pattern selection portion 352 included in the schedule information column 35 in Fig. 4, the "for housewife (all day available)" is selected, the registration processor 315 registers a pattern that receiving is possible all of the morning, the afternoon, and night as shown in Fig. 9a in the receiving method specifying schedule file 333 for the predetermined number of days (for example, one month). Further, if, in the receiving pattern selection portion 352 included in the schedule information column 35 in Fig. 4, the "for double income (only night available)" is selected, the registration processor 315 registers a pattern that receiving is not possible in the morning and in the afternoon but is possible during night only as shown in Fig. 9b in the receiving method specifying schedule file 333 for the predetermined number of days. Furthermore, if, in the receiving pattern selection portion 352 included in the schedule information column 35 in Fig. 4, the "for single (all day keeping)" is selected, the registration processor 315 registers a pattern that "keep until called for" is set for all of the morning, the afternoon, and night as shown in Fig. 9c in the receiving method specifying schedule file 333 for the predetermined number of days.

When a user clicks the my-template setting button 353 included in the schedule information column 35 in Fig. 4, the terminal of the user sends, to the registration processor 315, information that the my-template setting button 353 was selected. When the registration processor 315 receives information that the my-template setting button 353 was selected, the registration processor 315 sends information for the my-template setting screen to the terminal of the user. The terminal of the user displays a screen as shown in Fig. 10, for example, on the display device. In the example in Fig. 10, setting for one day and setting for one week can be performed. Either one is selected through radio buttons provided at the left of letters "one-day setting" and "one-week setting". When the one-day setting is performed in advance and the my-template is selected in the receiving pattern selection portion 352 in the schedule information column 35 in Fig. 4, the registration processor 315 registers schedule information in the receiving method specifying schedule file 333 as specified in Fig. 10. In the example in Fig. 10, a column for the one-day setting includes a pull-down menu 101 for displaying choices for the morning, a pull-down menu 102 for displaying choices for the afternoon, and the pull-down menu 103 for displaying choices for night.

On the other hand, when the one-week setting is performed in advance and the my-template is selected in the receiving pattern selection portion 352 in the schedule information column 35 in Fig. 4, the registration processor 315 registers the schedule information in the receiving method specifying schedule file 333 as specified in Fig. 10. In the example in Fig. 10, a column for the one-week setting includes a pull-down menu 104 for displaying a day of week, a pull-down menu 105 for displaying choices for the morning for each day of week, a pull-down menu 106 for displaying choices for the afternoon for each day of week, and the pull-down menu 107 for displaying choices for night. Fig. 10 shows a situation where Wednesday afternoon is currently being set in the one-week setting. When the registration button 108 in Fig. 10 is clicked, the terminal of the user sends the my-template setting information set by the user to the registration processor 315. The registration processor 315 holds the received my-template setting information in the data storage device 33. When the registration button 39 in Fig. 4 is clicked and the registration processor 315 receives the selection information of the registration button 39, the schedule information is registered in the receiving method specifying schedule file 333 in accordance with the my-template setting.

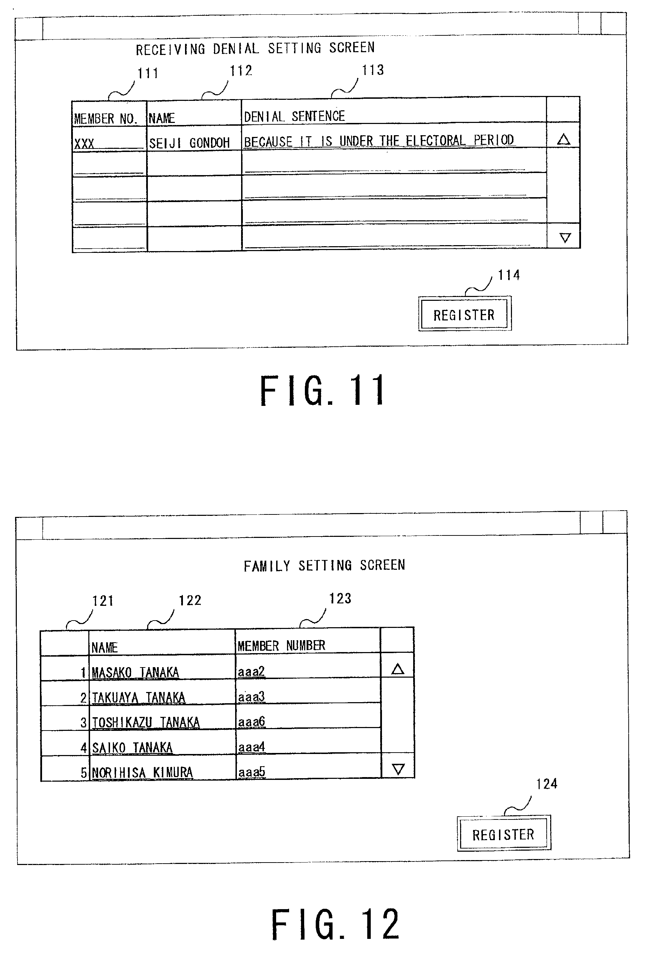

When the receiving denial setting button 38 in Fig. 4 is clicked, the terminal of the user sends, to the registration processor 315, information that the receiving denial setting button 38 was selected. When the registration processor 315 receives information that the receiving denial button was selected, information for the receiving denial setting screen is sent to the terminal of the user. The terminal of the user receives the information for the receiving denial setting screen and displays it on the display device. The screen example is shown in Fig. 11 In the example in Fig. 11, a member number column 111, a name column 112, a denial sentence 113 column 113, and the registration button 114. Here, for a shipment request from the member number xxx, Mr. Seiji Gondo, receiving denial is performed by using a sentence, "because it is under the electoral period...." When the registration button 114 in Fig. 11 is clicked, the terminal of the user sends, to the registration processor 315, information that the registration button 114 was clicked along with entered information. Then, the registration processor 315 registers them in the denying member number and denial message columns of the receiving schedule information 26 in the member file 335 shown in Fig. 3.

When the family member setting 37 in Fig. 4 is clicked, the terminal of the user sends, to the registration processor 315, information that the family setting button 37 was selected. The registration processor 315 receives the information that the family setting button was selected and then sends information for the family setting screen to the terminal of the user. The terminal of the user receives the information for the family setting screen and displays it on the display device. An example of this screen is shown in Fig. 12. In the example in Fig. 12, a serial number display column 121, a name column 122, a member number column 123, and a registration button 124 are provided. A user enters his/her family names and member numbers and then clicks the registration button 124. Then, the terminal of the user sends, to the registration processor 315, the information that the registration button 124 was clicked and the entered family information. The registration processor 315 receives the information that the registration button 124 was clicked and the entered family information and then registered them in the family setting file 334.

Incidentally, a person performing the family setting my be limited to a householder, for example.

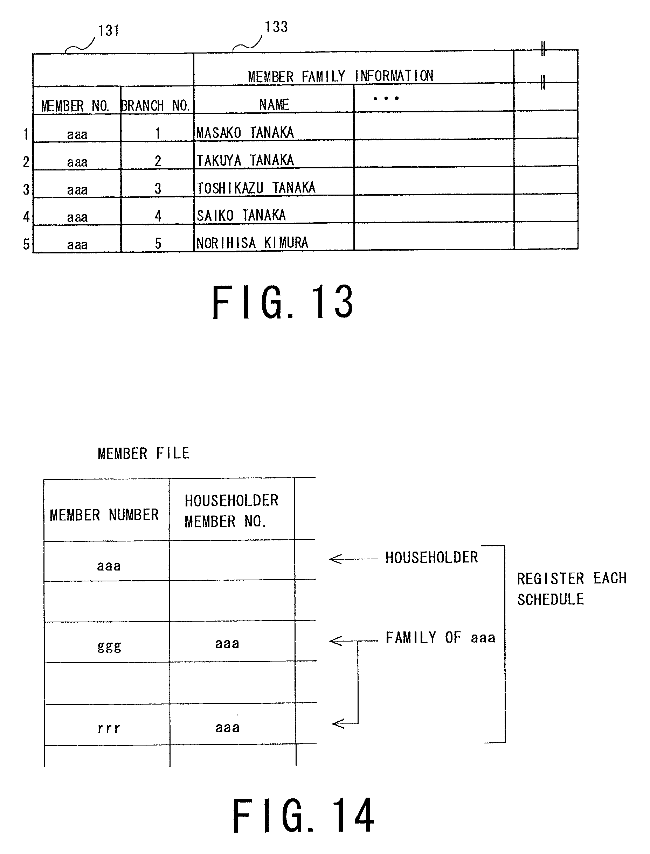

One example of the family setting file 334 is shown in Fig. 13. The example in Fig. 13 includes a member information column 131 including member number column and branch numbers of the member having performed the family setting, and a member family information column 133 including family members' names. As described above, the member number aaa may be the member number of the householder.

In this embodiment, as shown in Fig. 14, the member file 335 includes each person's member number columns and a householder's member number column, and the householder's member number is not registered for the householder. On the other hand, the householder's number (aaa in this example) is registered for family members. In this example, information that the householder member number is aaa is registered for member numbers ggg and rrr. Though it will be described in detail later, family members including the householder uses the registration processor 315 in order to register each schedule in the receiving form schedule file.

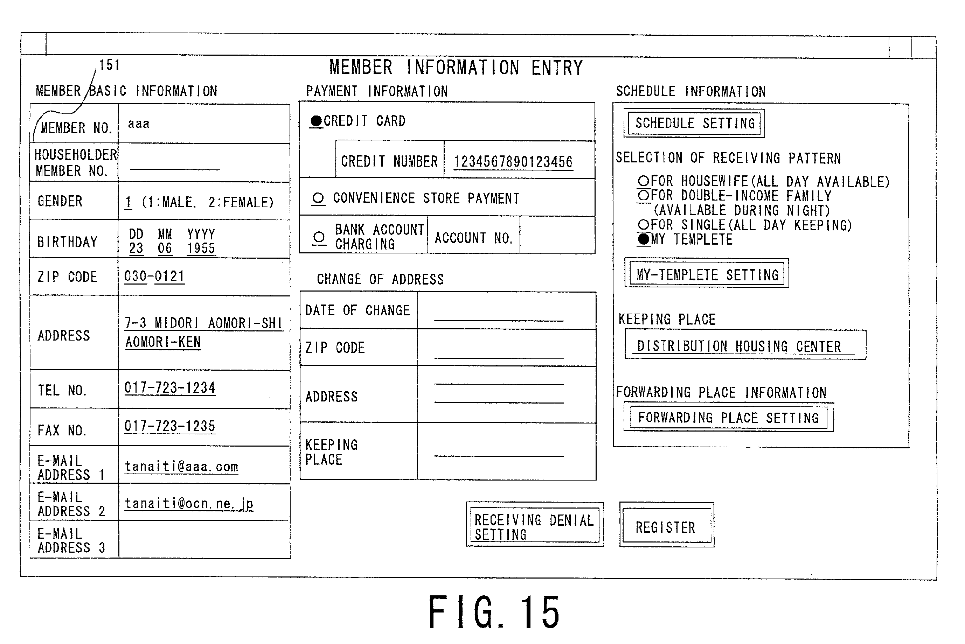

Although the householder registers and links his/her family members above, the householder can be specified from his/her family members when the member information entering screen as shown in Fig. 15 is used, for example The differences between Fig. 15 and Fig. 4 are that a field for entering a householder member number as member basic information is added and that the family setting button 37 is eliminated. When such an entering screen is used, the family member enters a member number of the householder member in the householder member number entering field 151 but the householder member does not enter anything in the householder member number entering field 151.

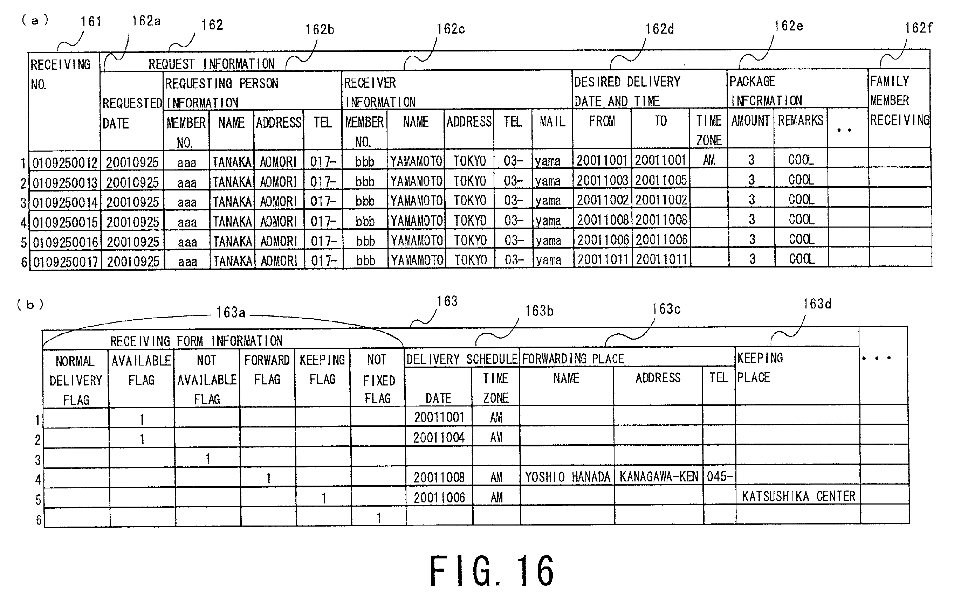

Fig. 16 show an example of a request receiving file 332. (a) portion in Fig. 16 includes a shipment request receiving number (No.) column 161 and request information column 162. The receiving numbers may be, for example, serial numbers. The request information column 162 includes a requested date column 162a, a requesting person information column 162b, a receiver information column 162c, a desired delivery date and time column 162d, a package information column 162e, and a flag column 162f for indicating availability of family member receiving. The requesting person information includes a member number (No.), a name, an address, a telephone number (TEL) and so on. The receiver information includes a member number (No.), a name, an address, a telephone number (TEL), e-mail address and so on. Information for the desired delivery date and time includes a first date of the desired delivery period (from), a final date of the desired delivery period (to), and a time zone. For the time zone, for example, the morning (AM), the afternoon (PM), night (NT) and so on are set. The package information includes an amount, remarks, and so on. The flag for indicating the availability of family member receiving is a flag indicating whether or not a form of receiving this package can be determined with reference to the schedule information of family members who are family-registered with the receiver.

(b) portion in Fig. 16 includes a receiving form information column 163. The receiving form information column 163 includes a receiving form instruction column 163a including a "normal delivery" flag, an "available for receiving" flag, an "not available for receiving" flag, a "forward" flag, a "keep until called for" flag, an "not fixed" flag, a delivery schedule column 163b, and a keeping place column 163d. In the receiving form instruction column 163a, only one flag corresponding to one determined by the schedule checking unit 313 is turned ON. In the example in (b) portion of Fig. 16, for the shipment requests in the first and second rows, only the "available" flag is turned ON. For the third row, only the "not available" flag is turned ON, and for the fourth row, only the "forward" flag is turned ON. Further, for the fifth row, only the "keeping" flag is turned ON and, for the sixth row, only the "not fixed" flag is turned ON .

The delivery schedule column 163b includes a date column and a time zone column. For the date and the time zone, information on the delivery scheduled date and time zone determined by the schedule checking unit 313 is registered. The forwarding place column 163c includes respective columns of a name, an address, a telephone number (TEL) of a given forwarding place. However, only information for the rows whose "forward" flag is turned ON is registered in this column. Only information for the rows whose "keep until called for" flag is turned ON is registered in the keeping place column 163d.

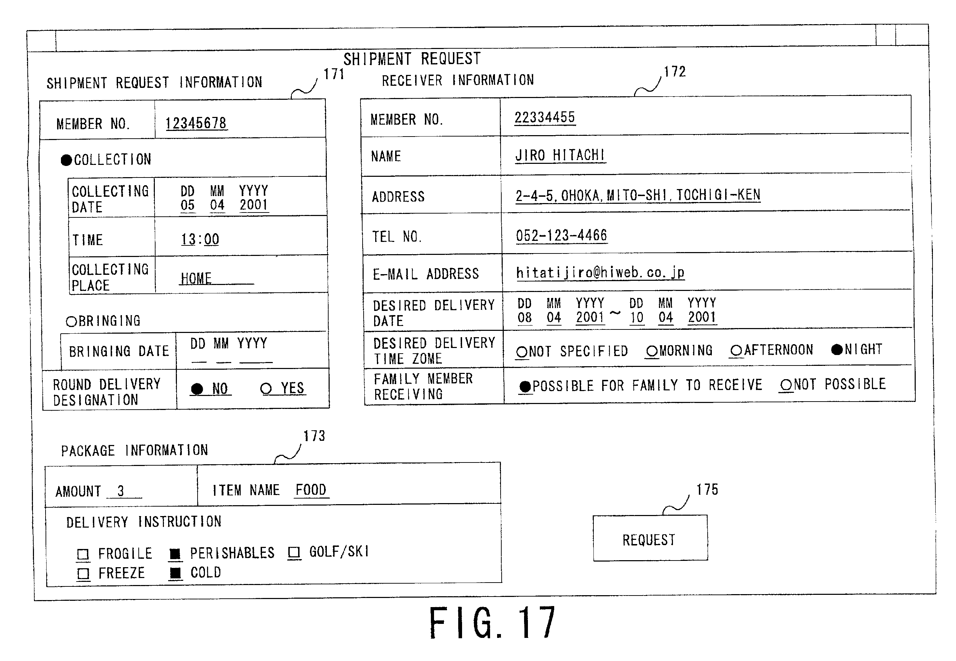

It is a request receiver 311 to register information in the (a) portion in Fig. 16 of the request receiving file 332. The request receiver 311 sends information for a shipment request screen to the sending side terminal 5 in response to an access from the sending side terminal 5. The sending side terminal 5 receives the information for the shipment request screen and displays it on the display device. One example of the displayed screen is shown in Fig. 17. In the example in Fig. 17, a shipment request information column 171, a receiver information column 172, a package information column 173, and a request button 175 are provided. The shipment request information column 171 includes a member number (No.) entering field, a collection or bringing selection field, and the round-delivery selection field for specifying whether or not round-delivery is requested. In the collection or bringing selection field, fields for entering collecting date, time, and place if collection is selected. In the collecting place field, an address may be entered, or a description method such as "home" may be adopted like in this example. Further, if bringing is selected, a field for entering a date when a package is brought is also provided. When the shipment request information is sent from the sending side terminal 5 to the request receiver 311, the request receiver 311 searches the member file 335 in accordance with the member number in order to obtain information such as member's name, address, telephone number and so on and registers them in the request receiving file 332. Further, the selection between collection and bringing, a collecting date and a collecting place if collecting or bringing date if bringing, and the selection of the round delivery are registered therein.

In the receiver information column 172, respective field for entering the receiver's member number (No.), name, address, telephone number, e-mail address and desired delivery date, a desired delivery time zone selection filed and a family member receiving possibility selection field are provided. The member number must be required but information including the name, reading, address, telephone number and e-mail address does not have to be entered. For the desired delivery date, a period can be specified. For the desired delivery time zone, any one of Not Specified, Morning, Afternoon, or Night may be selected by using a radio button. Also for the possibility of family member receiving, either one of Possible for family member to receive or Not Possible may be selected by using a radio button. When the receiver information is sent from the sending side terminal 5 to the request receiver 311, the request receiver 311 registers the member number, name, reading, address, telephone number, e-mail address and so on as receiver information of the request receiving file 332. The delivery date and delivery time zone are registered in the request receiving file 332 as information on the desired delivery date and time. The information on the "family member receiving" flag is reflected on the "family member receiving" flag 162f in the request receiving file 332.

In the package information column 173, an amount entering field, an item name entering field, and a delivery instruction selection field. For the delivery instruction selection filed, selection can be made from Fragile, Perishables, Golf or Ski, Freeze, Cold. When the package information is sent from the sending side terminal 5 to the request receiver 311, the request receiver 311 registers the received information in the package information column 162e in the request receiving file 332.

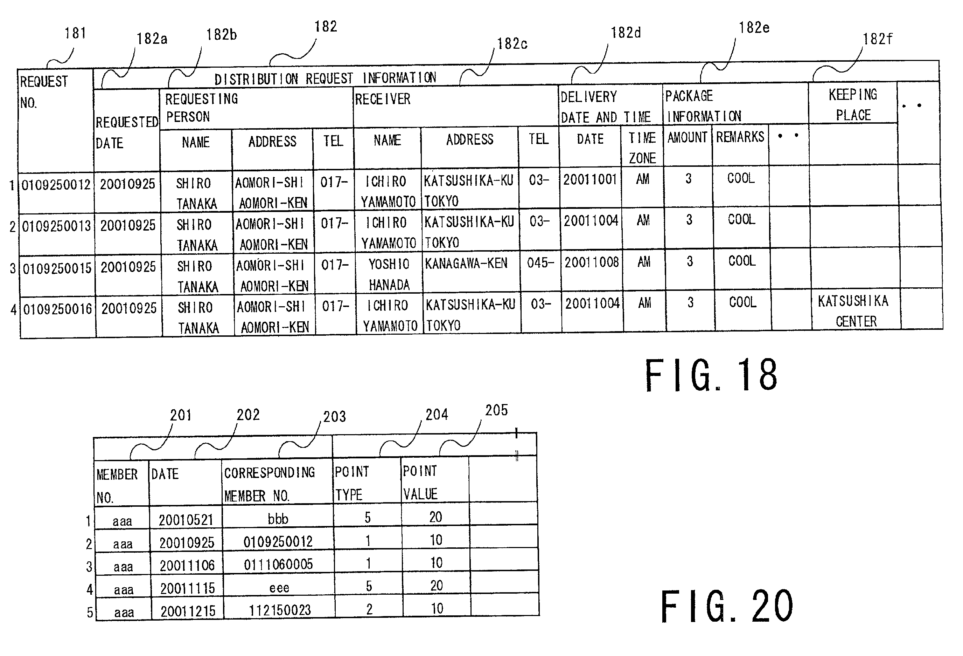

Fig. 18 shows one example of a distribution request information file 331 that a distribution request information generator 317 generates from the request receiving file 332. The example in Fig. 18 includes a request number (No. ) column 181 and a distribution request information column 182. The distribution request information column 182 includes a requested date column 182a, a requestor information column 182b, a receiver information column 182c, a delivery date and time column 182d, a package information column 182e, and a keeping place column 182f. The requestor information includes information such as a name, an address, a telephone number (TEL) and so on. The receiver information includes information such as a name, an address, a telephone number (TEL) and so on. Information for the delivery date and time includes a date, and a time zone. The package information includes an amount, remarks and so on. In the keeping place, information is registered only if keeping is designated.

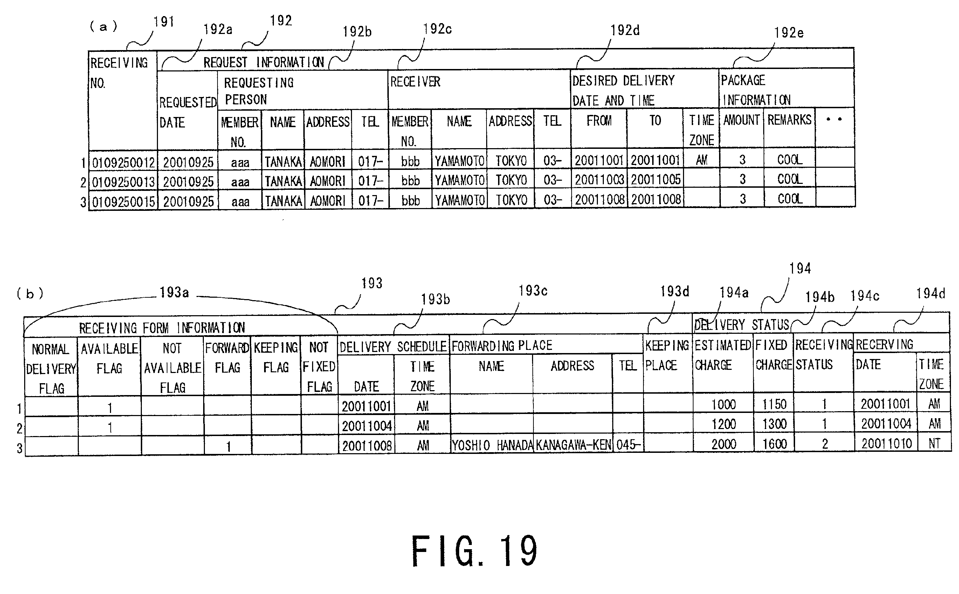

Fig. 19 show an example of a history file 336. (a) portion in Fig. 19 includes a receiving number (No) column 191 and a request information column 192. The request information column 192 includes a requested date 192a, a requestor information column 192b, a receiver information column 192c, a desired delivery date and time column 192d, and a package information column 192e. The requestor information column 192b includes his/her member number (No), name, address, and telephone number (TEL) and so on. The receiver information column 192c includes his/her member number (No.), name, address, telephone number (TEL) and so on. The desired delivery date and time column 192d includes a desired starting date (from), desired completing date (to), and a time zone. The package information column 192e includes an amount, remarks, and so on.

(b) portion in Fig. 19 includes a receiving form information column 193 and a delivery status column 194. The receiving form information column 193 includes a receiving form designation column 193a, a delivery schedule column 193b, a forwarding place column 193c, and a keeping place column 193d. Any one of the "normal delivery" flag, the "available for receiving" flag, the "not available for receiving" flag, the "forward" flag, the "keep until called for" flag, and the "not fixed" flag is turned ON. The delivery schedule column 193b includes a delivery schedule date column and a time zone column. The forwarding place column 193c includes respective columns of a name, an address, a telephone number (TEL) and so on. However, the forwarding information is registered only for rows where the "forward" flag is turned ON such as shown in the third row in Fig. 19(b). Information on the keeping place is registered only for a row where the "keep until called for" flag is turned ON.

The delivery status column 194 includes an estimated delivery charge column 194a, a fixed delivery charge column 194b, a receiving status column 194c, and a receiving information column 194d. In the receiving status column 194c, 1 is set if a package has been delivered as scheduled. 2 is set if a package has not been delivered as scheduled, and 9 is set if a package is returned to the sender. Further, as receiving information, information on the date and time zone when the receiver receives the package is registered.

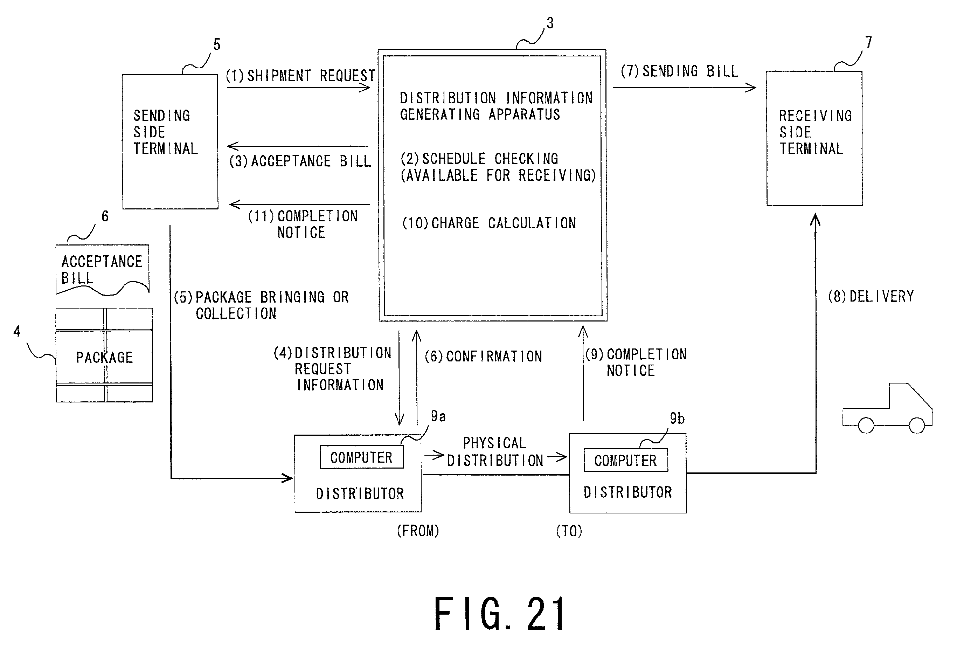

Fig. 20 shows an example of the point file 337. In the point file 337 in Fig. 20, one row of data is added for each time a point is given. In the example in Fig. 20, a member number (No.) column 201, a date column 202, corresponding member number, which is sender's member number if points are given to a receiver or receiver's member number if points are given to a sender, a point type column 204 for indicating a reason why a point is given at this time, and a point value column 205. Among the point types, 1 is a shipment request point, and 2 is a receiving point given when a receiver has received a package in accordance with the delivery schedule. 3 is a forwarding point given when a receiver instructs forwarding. 4 is a keeping point given when a receiver instructs keeping, and 5 is a new subscription point.

Next, a system processing flow according to this embodiment will be described with reference to Fig. 21 and following figures. Fig. 21 shows a processing flow in a case where a form of receiving by a receiver is "available" for receiving" for a shipment request from the sending side terminal 5. First of all, the distribution information generating apparatus 3 receives a shipment request from the sending side terminal 5 (step (1)). Incidentally, the distribution information generating apparatus 3 sends information for a shipment request entering screen to the sending side terminal 5 in response to an access by the sending side terminal 5. Then, the sending side terminal 5 receives the information for the shipment request entering screen and displays the shipment request entering screen as shown in Fig. 17, for example, on the display device. Then, the sender enters required information on the shipment request input screen and clicks a request button. In response to that, a shipment request is sent from the sending side terminal 5 to the distribution information generating apparatus 3.

The request receiver 311 of the distribution information generating apparatus 3 receives the shipment request from the sending side terminal 5 and registers it in the request receiving file 332. Then, the schedule checking unit 313 performs schedule checking processing for the receiver or the like (step (2)). The detail will be described later. Here, it is assumed that the "available for receiving" is determined and a delivery form including a delivery schedule is determined. Incidentally, at this stage, information on the delivery schedule is registered in the receiver's schedule information. Then, the request receiver 311 sends by e-mail, for example, a delivery acceptance bill to the sender (step (3)). The sender uses the sending side terminal 5 to receive the e-mail of the delivery acceptance bill.

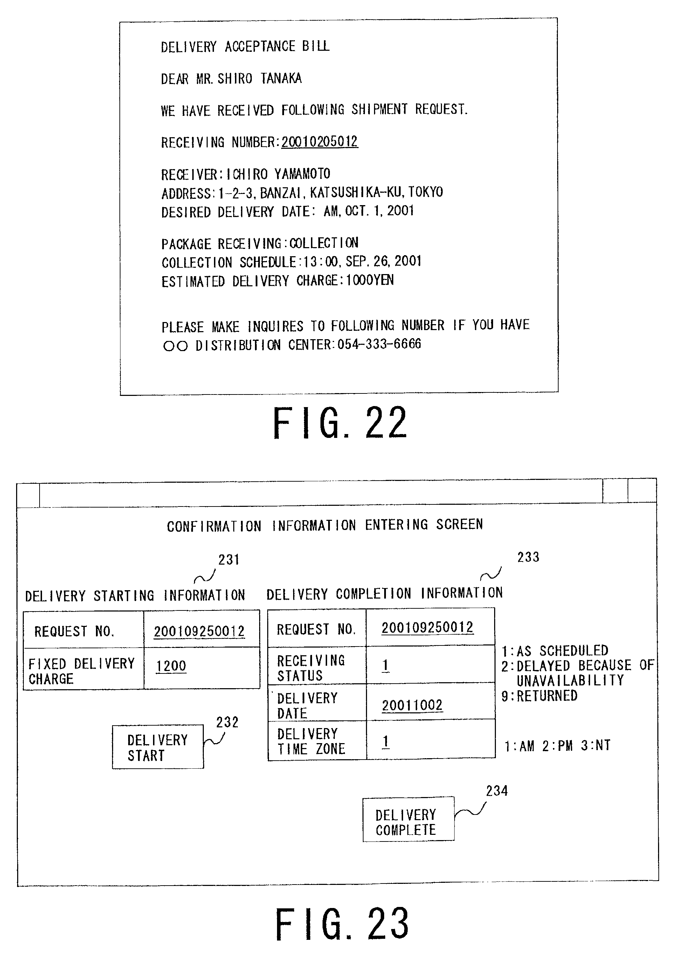

For example, a delivery acceptance bill as shown in Fig. 22 is sent from the request receiver 311 to the sender. Here, a delivery acceptance bill addressed to Mr. Shiro Tanaka, who is a sender, is shown. In the example in Fig. 22, information of his receiving number, a receiver, a receiver's address, a desired delivery date, a package receiving, a scheduled collection date, and an estimated delivery charge is included. Instead of the collection schedule, information of a bringing-out schedule may be included. The estimated delivery charge is calculated by, for example, request receiver 311 in accordance with a predetermined price list.

Returning to the description regarding Fig, 21, the distribution request information generator 317 of the distribution information generating apparatus 3 generates distribution request information. Then, the distribution request information generator 317 registers in the distribution request information file 331 and sends to the distributor computer 9a the distribution request information (step (4)). When the distributor computer 9a receives the distribution request information from the distribution request information generator 317, the distributor computer 9a registers it in the distribution request information file (not shown) in the distributor computer 9a.

Based on the distribution request information, the distributor collects a package 4 if a collection is required or waits until the sender brings the package 4 if bringing of the package is specified (step(5)). Incidentally, the distributor computer 9a may print a package bill based on distribution request information. In that case, the package bill is pasted on the package 4. When the distributor receives the package 4 from the sender, an acceptance bill 6 sent from the distribution information generating apparatus 3 may be provided by the sender in order to check the shipment request.

Once the distributor receives the package 4, the distributor performs a confirmation input for the distribution information generating apparatus 3 (step (6)). That is, when the distributor computer 9a accesses the distribution information generating apparatus 3, the confirmation information entering unit 319 sends information for a confirmation information entering screen to the distributor computer 9a The distributor computer 9a displays the confirmation information entering screen on the display device.

One example of the confirmation information entering screen is shown in Fig. 23. In the example in Fig. 23, a delivery starting information entering field 231, a delivery completion information entering field 233, a delivery start button 232, and a delivery complete button 234. The delivery starting information entering field 231 includes a request number (No.) entering field, and a fixed delivery charge entering field. The delivery completion information entering field 233 includes a request number (No.) entering field, a receiving status entering field, a delivery date entering filed, and a delivery time-zone entering filed. For the receiving status, it is set such that 1 is entered if the package is delivered as scheduled. 2 is entered if the package is delay-delivered (re-delivered) due to unavailability of the receiver. 9 is entered if the package is returned. For the delivery time-zone, 1 is entered for the morning delivery. 2 is entered for the afternoon delivery. 3 is entered for the night delivery.

Here, for the confirmation information at the starting point of the physical distribution, the distributor enters information in the delivery starting information entering field 231 and clicks the delivery start button 232. Then, the distributor computer 9a sends the delivery starting information to the confirmation information entering unit 319 in the distribution information generating apparatus 3. The confirmation information entering unit 319 registers the delivery starting information received from the distributor computer 9a in the history file 336. Incidentally, though not shown in Fig. 21, points are given to the sender at this stage, for example.

Further, the request receiver 331 sends e-mail as a sending bill to the receiver (step (7)). The receiver receives the sending bill by operating the receiving side terminal 7. The sending bill includes information such as sender's name and delivery date and time zone. Then, the distributor delivers the package 4 to the receiver (step (8)). Once the delivery has completed, the distributor sends a completion notice from the distributor computer 9b to the distribution information generating apparatus 3 (step (9)). In this processing, when the distributor computer 9b accesses the distribution information generating apparatus 3, the distribution information generating apparatus 3 returns the information for the confirmation entering screen to the distributor computer 9b. The distributor computer 9b receives the information for the confirmation entering screen and displays the screen as shown in Fig. 23, for example. Here, when information is entered in the delivery completion information entering filed 233 in Fig. 23 and then the delivery complete button 234 is clicked, the distributor computer 9b sends the delivery completion information to the confirmation information entering unit 319 of the distribution information generating apparatus 3. The confirmation information entering unit 319 receives the delivery completion information and then registers the information in the history file 336. Then, charge calculation is performed again if necessary (step (10)). It may be omitted if not necessary. Further, though not shown, the receiving status data included in the delivery completion information is referenced, and if the delivery has completed by following the delivery schedule, points are given to the receiver.

Finally, the confirmation information entering unit 319 sends e-mail for example, as a delivery completion notice to the sender in response to the delivery completion notice from the distributor computer 9b (step (11)). The sender receives the completion notice by operating the sending side terminal 5,

Through the processing flow as above, the sender confirms that the receiver can receive the package. Then, the sender can hand over the package to the distributor and send it without anxiety. The receiver also can receive the package easily since the delivery is performed in accordance with his/her schedule information registered in advance and he/she is informed of the delivery time in advance through the sending bill. The distributor can also eliminate inefficient delivery that delivery is performed for the unavailable receiver, leading to the cost reduction. Incidentally, the less wasteful delivery provides better effects on the global environment.

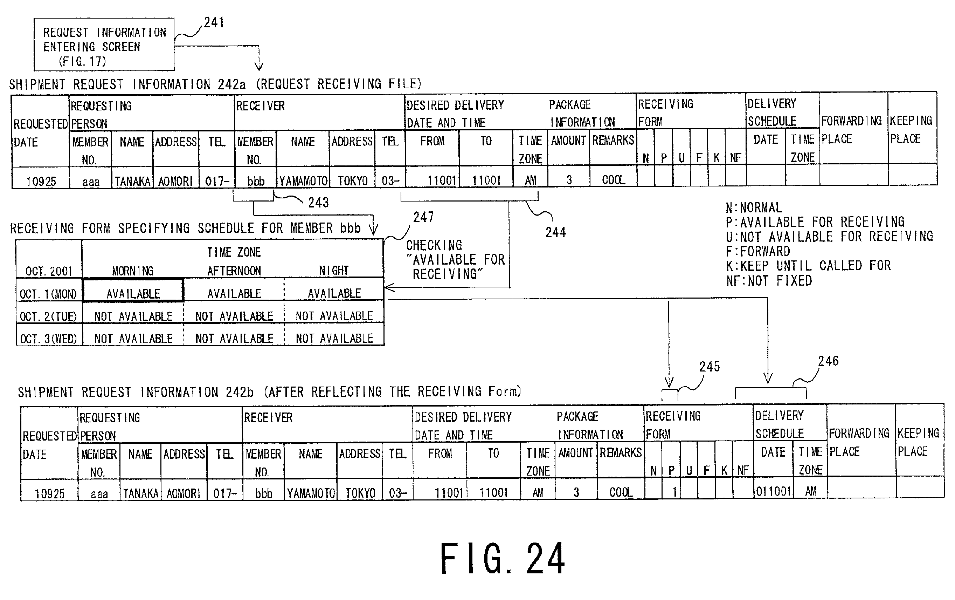

Next, processing by the request receiver 311 and the schedule checking unit 313 in a case where a receiver's form of receiving is "available for receiving" for a shipment request from the sending side terminal 5 will be described with reference to Fig. 24. The request receiver 311 registers, as shipment request information 242a, in the request receiving file 332 information entered on the request information entering screen 241 (Fig. 17) displayed on the sending side terminal 5 and sent to the request receiver 311 by the sender. Here, a requested date, requesting person information, receiver information, information on desired delivery date and time and package information are obtained from inputs onto the request information entering screen 241. Then, the request receiver 311 outputs receiver's member number 243 and information 244 on desired delivery date and time to the schedule checking unit 313. Here, the member number is "bbb" and the desired delivery date and time is the morning of October 1, 2001. The schedule checking unit 313 searches the delivery form specifying schedule file 333 by using the member number 243 and obtains the receiving form specifying schedule 247 of the member bbb in order to check whether he is available for receiving on the morning of October 1, 2001, which is the desired delivery date and time.

In this example, he is available for receiving as shown in a part surrounded by a thick line in the receiving form specifying schedule 247. Therefore, the schedule checking unit 313 turns ON the "deliverable (P)" flag under the delivery form in the shipment request information 242b in the request receiving file 332. In addition, the schedule checking unit 313 registers the desired delivery date and time in columns of the date and time-zone under the delivery schedule 246.

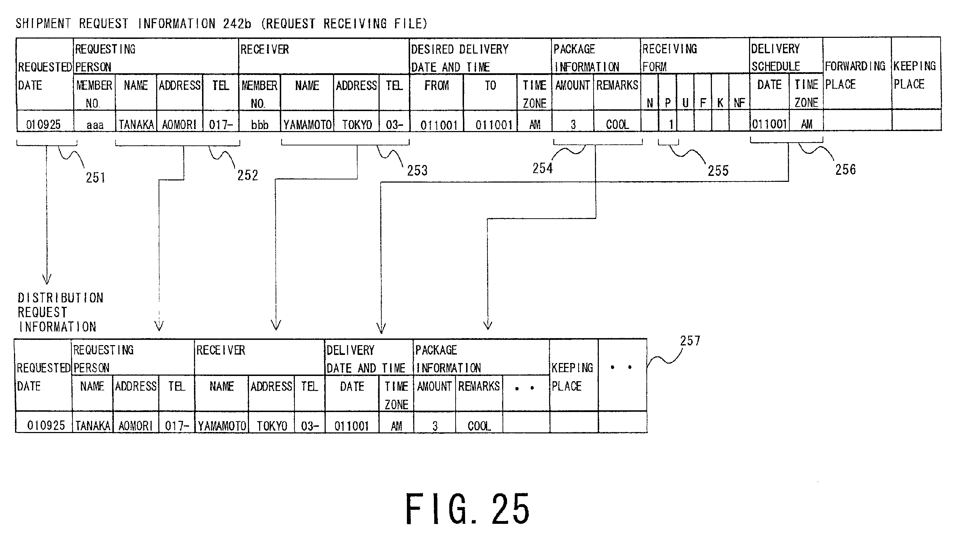

Next, processing by the distribution request information generator 317 following the processing in Fig. 24 will be described with reference to Fig. 25. The distribution request information generator 317 uses a shipment request date 251, the name, the address and the telephone number (TEL) in the requesting person information 252, the name, the address and the telephone number (TEL) of the receiver information 253, package information 254 including an amount and remarks, the "deliverable" flag 255 under the receiving form, and the delivery schedule 256, which are included in the delivery request information 242b stored in the request receiving file 332, to generate distribution request information 257 in the distribution request information file 331. Then, the distribution request information generator 317 registers the distribution request information 257 in the distribution request information file 331 and sends it to the distributor computer 9. However, a configuration may be possible where the content of the distribution request information file 331 is sent in response to an access by the distributor computer 9.

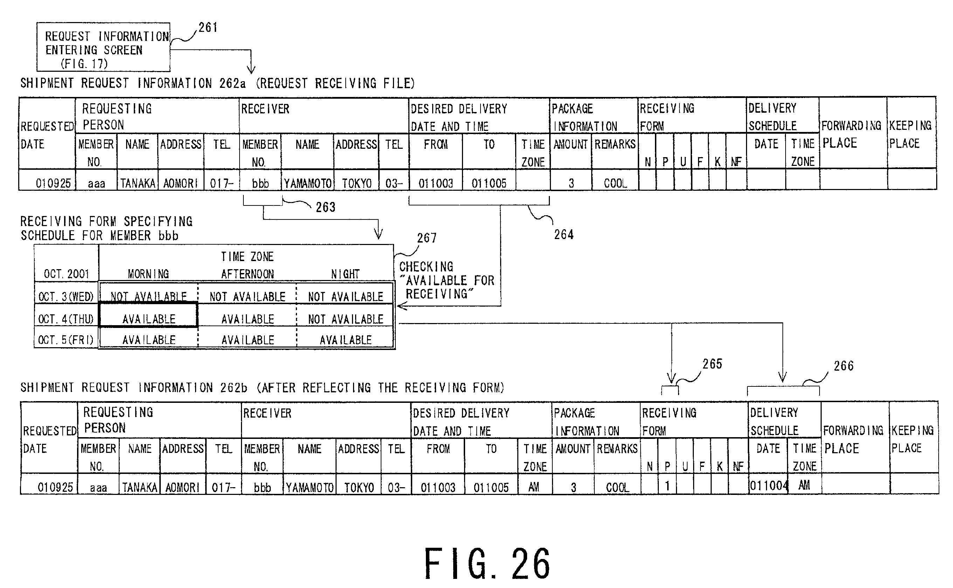

Next, processing by the request receiver 311 and the schedule checking unit 313 in a case where a receiver's form of receiving is "available for receiving" for a shipment request in which a plurality of desired delivery dates and times are specified from the sending side terminal 5 will be described with reference to Fig. 26. The request receiver 311 registers, as shipment request information 262a, in the request receiving file 332 information entered on the request information entering screen 261 (Fig. 17) displayed on the sending side terminal 5 and sent to the request receiver 311 by the sender. Here, a requested date, requesting person information, receiver information, information on a desired delivery date and time, and package information are obtained from inputs onto the request information entering screen 261. Then, the request receiver 311 outputs receiver's member number 263 and information 264 on desired delivery date and time to the schedule checking unit 313. Here, the member number is "bbb" and the desired delivery date is from October 3, 2001 to October 5, 2001. The schedule checking unit 313 searches the delivery form specifying schedule file 333 by using the member number 263 and obtains the receiving form specifying schedule 267 of the member bbb in order to check whether he is available for receiving from October 3, 2001 to October 5, 2001, which is desired delivery date and time.

In this example, he is not available in all time zones on October 3, but he is available for receiving on the morning of October 4 and the afternoon of October 4. He is not available for receiving at night of October 4 but is available for receiving in all time zones of October 5. Here, the earliest date and time-zone when he is available for receiving is adopted as a delivery scheduled date. Therefore, it is the morning of October 4, and it is surrounded by a thick line in the receiving form specifying schedule 247 in Fig. 26. Thus, the schedule checking unit 313 turns ON the "deliverable (P)" flag under the delivery form in the shipment request information 262b in the request receiving file 332. In addition, the schedule checking unit 313 registers the morning of October 4, 2001 in the date and time-zone under the delivery schedule 266.

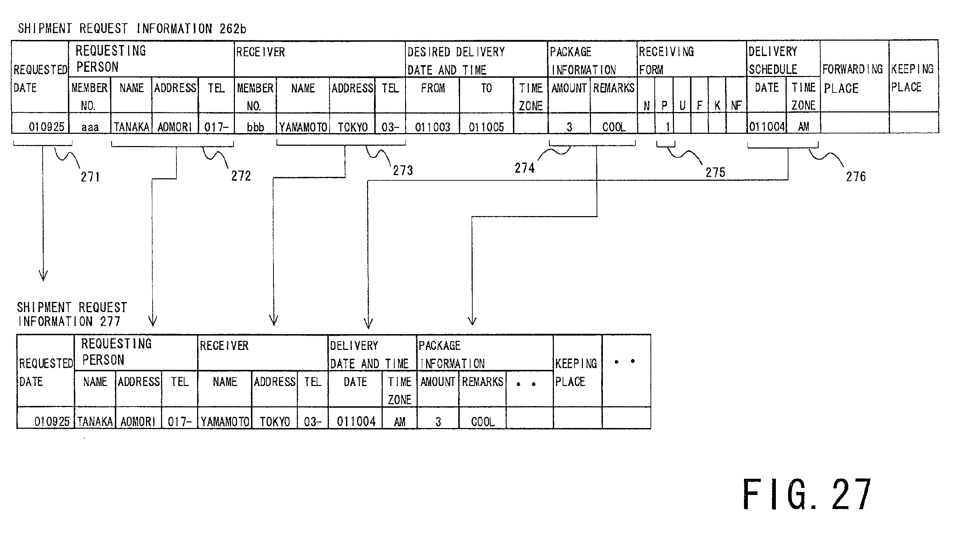

Next, processing by the distribution request information generator 317 following the processing in Fig. 26 will be described with reference to Fig. 27, The distribution request information generator 317 uses a shipment request date 271, the name, the address and the telephone number (TEL) of the requesting person information 272, the name, the address and the telephone number (TEL) of the receiver information 273, package information 274 including an amount and remarks, the "deliverable" flag 275 under the receiving form, and the delivery schedule 276, which are included in the delivery request information 262b stored in the request receiving file 332, to generate distribution request information 277 in the distribution request information file 331. Then, the distribution request information generator 317 registers the distribution request information 277 in the distribution request information file 331 and sends it to the distributor computer 9. However, a configuration may be possible where the content of the distribution request information file 331 is sent in response to an access by the distributor computer 9.

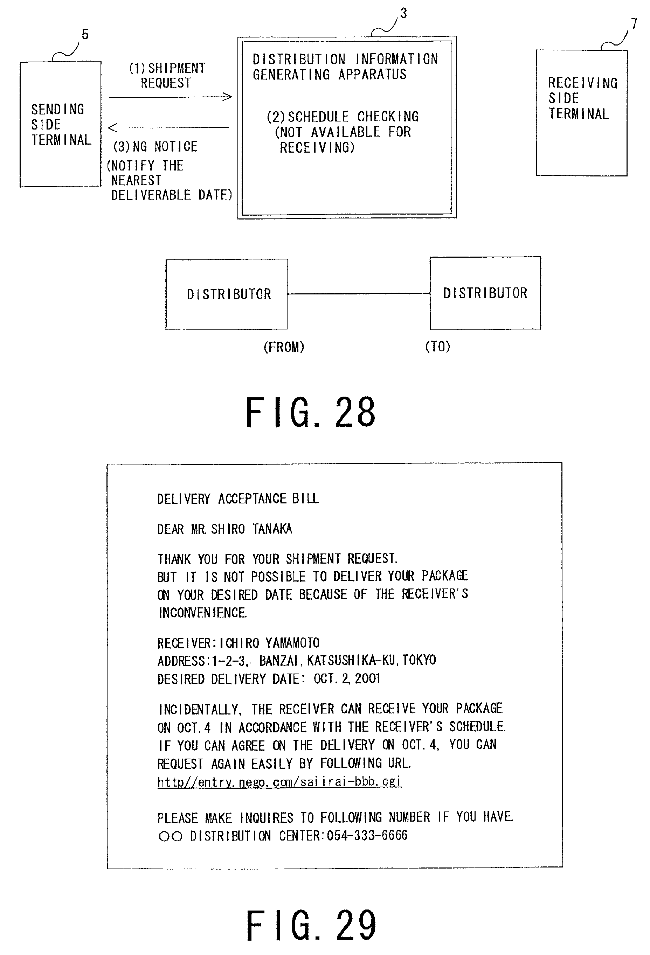

Fig. 28 shows a processing flow in a case where a form of receiving by a receiver is "not available for receiving" for a shipment request from the sending side terminal 5. First of all, the distribution information generating apparatus 3 receives a shipment request from the sending side terminal 5 (step (1)). Incidentally, the distribution information generating apparatus 3 sends information for a shipment request entering screen information to the sending side terminal 5 in response to an access by the sending side terminal 5. Then, the sending side terminal 5 receives the information for the shipment request entering screen and displays the shipment request entering screen as shown in Fig. 17, for example, on the display device. Then, the sender enters required information on the shipment request entering screen and clicks a request button. Thus, a shipment request is sent from the sending side terminal 5 to the distribution information generating apparatus 3.

The request receiver 311 of the distribution information generating apparatus 3 receives the shipment request from the sending side terminal 5 and registers it in the request receiving file 332. Then, the schedule checking unit 313 performs schedule checking processing for the receiver or the like (step (2)). The detail will be described later. Here, it is assumed that the receiver is "not available for receiving". For the "not available for receiving", the nearest deliverable date for "available for receiving", "forward", or "keep until called for" is searched in advance. Then, the request receiver 311 sends e-mail, for example, as an NG notice including the nearest deliverable date to the sender (step (3)). The sender receives the NG notice by operating the sending side terminal 5. One example of the NG notice is shown in Fig. 29. In the example in Fig. 29, a sentence informing that it cannot be delivered, the receiver, the receiver's address, the desired delivery date, the deliverable date (October 4, here), a link to an Web page (http://entry.nego.com/saiirai-bbb.cgi) for re-shipment request, and so on are included. When the sender determines the delivery on the deliverable date, he/she clicks the link to the Web page for the re-shipment request, for example. Then, the sending side terminal 5 accesses to the Web page for the re-shipment request, and the request receiver 311 sends information for the Web page to the sending side terminal 5. The sending side terminal 5 receives the information for the Web page and displays it on the display device.

Incidentally, substantially the same processing is performed in a case for receiving denial. However, in this case, the request receiver 311 searches the member file 335 and examines whether or not the sender's member number matches to the receiving denying member number. If matches, an NG notice including a denial message registered in the member file 335 is sent to the sender.

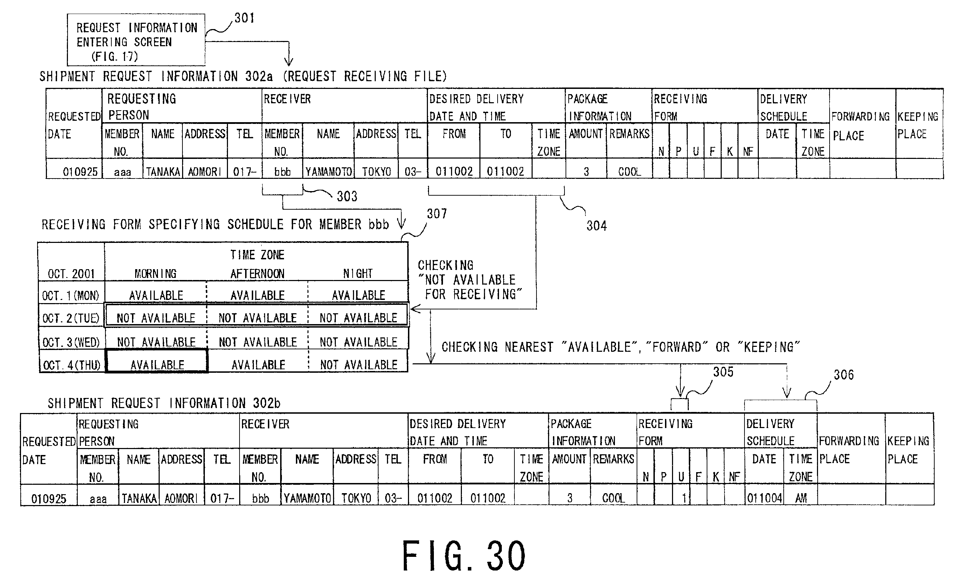

Processing by the request receiver 311 and the schedule checking unit 313 in a case where a receiver is "not available for receiving" as shown in Fig. 28 will be described with reference to Fig. 30. The request receiver 311 registers, as shipment request information 302a, in the request receiving file 332, information entered on the request information entering screen 301 (Fig. 17) displayed on the sending side terminal 5 and sent to the request receiver 311 by the sender. Here, a requested date, a requesting person information, a receiver information, information on a desired delivery date and time and package information are obtained from inputs onto the request information entering screen 301. Then, the request receiver 311 outputs receiver's member number 303 and information 304 on the desired delivery date and time to the schedule checking unit 313. Here, the member number is "bbb" and the desired delivery date is October 2, 2001. The schedule checking unit 313 searches the delivery form specifying schedule file 333 by using the member number 303 and obtains the receiving form specifying schedule 307 of the member bbb in order to check whether or not he is available for receiving on October 2, 2001, which is the desired delivery date and time.

In this example, all of the time-zones are "not available for receiving" on October 2. However, the first time zone which is after October 2 and for which "available for receiving", "forward", or "keep until called for" is specified is searched. Then, in this example, as shown in a part surrounded by a thick line in the receiving form specifying schedule 307, October 4 is specified for "available for receiving". Therefore, the schedule checking unit 313 sets ON the "undeliverable (U)" flag of the receiving form in the shipment request information 302b in the request receiving file 332, and registers the nearest deliverable date in the date and the time zone of the delivery schedule 246. Thus, by registering the nearest deliverable date in the shipment request information 302b of the request file 332, the sender can uses this information of the deliverable date when he/she performs the shipment request again. That is, the distribution information generating apparatus 3 can move to the next processing without reference to the schedule information again.

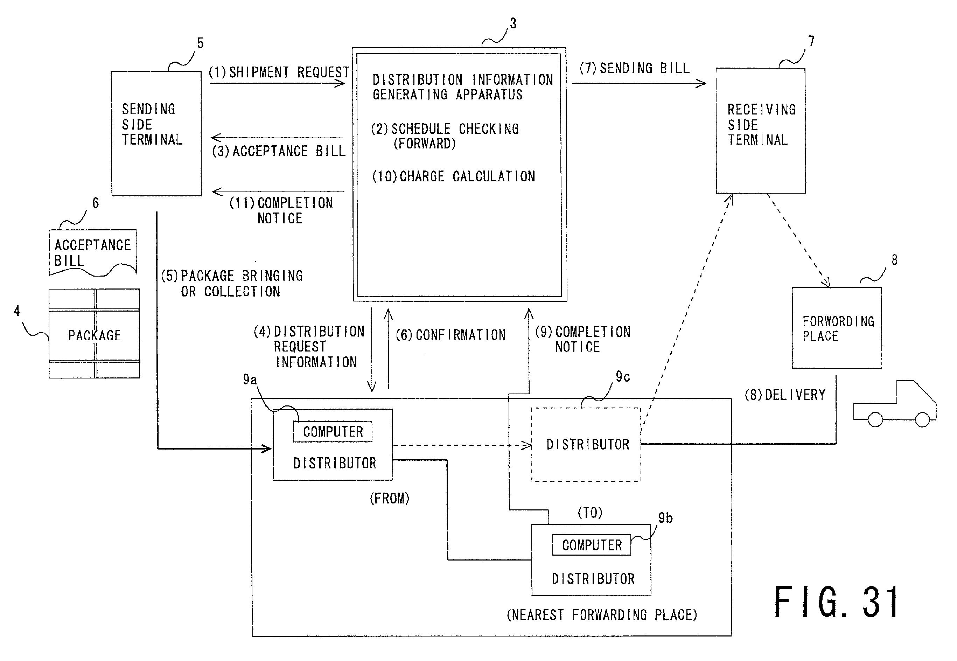

Next, Fig. 31 shows a processing flow in a case where a form of receiving by a receiver is "forward" for a shipment request from the sending side terminal 5. First of all, the distribution information generating apparatus 3 receives a shipment request from the sending side terminal 5 (step (1)). Incidentally, the distribution information generating apparatus 3 sends information for a shipment request entering screen to the sending side terminal 5 in response to an access by the sending side terminal 5. Then, the sending side terminal 5 receives the information for the shipment request entering screen and displays the shipment request entering screen as shown in Fig. 17, for example, on the display device. Then, the sender enters required information on the shipment request entering screen and clicks a request button. Thus, a shipment request is sent from the sending side terminal 5 to the distribution information generating apparatus 3.

The request receiver 311 of the distribution information generating apparatus 3 receives the shipment request from the sending side terminal 5 and registers it in the request receiving file 332. Then, the schedule checking unit 313 performs schedule checking processing for the receiver or the like (step (2)). The detail will be described later. Here, it is assumed that it is determined as deliverable by forwarding and a delivery form including the delivery schedule is also determined. Then, the request receiver 311 send e-mail, for example, as a delivery acceptance notice to the sender (step (3)). The sender uses the sending side terminal 5 to receive the mail of the delivery receiving notice. The delivery acceptance notice as shown in Fig. 22, for example, is sent from the request receiver 311 to the sender. Here, that the package will be forwarded is not included in the delivery acceptance notice.

Next, the distribution request information generator 317 of the distribution information generating apparatus 3 generates distribution request information. Then, the distribution request information generator 317 registers in the distribution request information file 331 and sends the distributor computer 9a the distribution request information (step (4)). When the distributor computer 9a receives the distribution request information from the distribution request information generator 317, the distributor computer 9a registers it in the distribution request information file (not shown) in the distributor computer 9a.

Based on the distribution request information, the distributor collects a package 4 if a collection is required or waits until the sender brings the package 4 if the sender designates "bringing" (step (5)). Incidentally, the distributor computer 9a may print a package bill based on distribution request information. In that case, the package bill is pasted on the package 4. When the distributor receives the package 4 from the sender, an acceptance bill 6 sent from the distribution information generating apparatus 3 may be provided by the sender in order to check the shipment request.

Once the distributor receives the package 4, the distributor performs a confirmation input for the distribution information generating apparatus 3 (step (6)). That is, when the distributor computer 9a accesses the distribution information generating apparatus 3, the confirmation information entering unit 319 sends information for a confirmation information entering screen to the distributor computer 9a. The distributor computer 9a displays the confirmation information entering screen on the display device.

Here, for the confirmation information at the starting point of the physical distribution, the distributor enters information in the delivery starting information entering field 231 and clicks the delivery start button 232. Then, the distributor computer 9a sends the delivery starting information to the confirmation information entering unit 319 in the distribution information generating apparatus 3. The confirmation information entering unit 319 registers the delivery starting information received from the distributor computer 9a in the history file 336. Incidentally, though not shown in Fig. 31, points are given to the sender at this stage, for example.

Further, the request receiver 331 sends e-mail as a sending bill to the receiver (step (7)). The receiver receives the sending bill by operating the receiving side terminal 7. The sending bill includes information such as sender's name delivery date and time zone, and the forwarding place. Then, the distributor delivers the package 4 to the forwarding place (step (8)). In this embodiment, the package 4 is not delivered to the receiver but delivered to the forwarding place 8 directly. That is, routes indicated by doted lines from the distributor 9c to the receiver (receiving side terminal 7) and from the receiver (receiving side terminal 7) to the forwarding place are not used. Here, the receiver pays the delivery charge occurred from the forwarding from the receiver's home to the forwarding place 8. However, since the distributor does not perform delivery to the receiver's home, the cost therefore is reduced. Part of the cost reduction is returned to the receiver as points for the forwarding. For billing to the receiver, the amount billed to the receiver may be registered in the history file 336 in correspondence with the receiving number.

Once the delivery has completed, the distributor sends a completion notice from the distributor computer 9b to the distribution information generating apparatus 3 (step (9)). In this processing, when the distributor computer 9b accesses the distribution information generating apparatus 3, the distribution information generating apparatus 3 returns information for a confirmation entering screen to the distributor computer 9b. The distributor computer 9b receives the information for the confirmation entering screen and displays the screen as shown in Fig. 23, for example. Here, when information is entered in the delivery completion information entering filed 233 in Fig. 23 and then the delivery complete button 234 is clicked, the distributor computer 9b sends the delivery completion information to the confirmation information entering unit 319 of the distribution information generating apparatus 3. The confirmation information entering unit 319 receives the delivery completion information and then registers the information in the history file 336. Then, charge calculation is performed again (step (10)). Incidentally, in case of the forwarding, it may be processing for calculating a charge billed to the receiver for the forwarding. Further, though not shown in Fig. 31, a point for the forwarding may be given to the receiver at this stage.

Finally, the confirmation information entering unit 319 sends e-mail, for example, as a delivery completion notice to the sender in response to the delivery completion notice from the distributor computer 9b (step (11)). The sender receives the completion notice by operating the sending side terminal 5,

Through the processing flow as above, the sender can confirm that the receiver can receive the package. Then, the sender can hand over the package to the distributor and send it without anxiety. The receiver also can feel easy since the forwarding is performed in accordance with his/her schedule information registered in advance and he/she is informed of the forwarding in advance through the sending bill or the like. The distributor can also perform the direct delivery to the forwarding place, leading to the cost reduction.

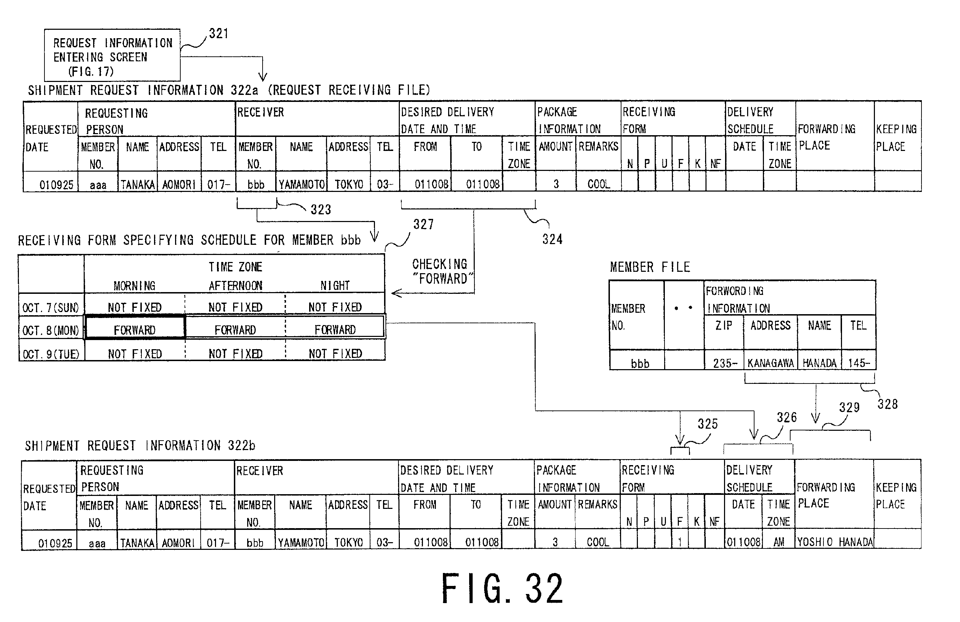

Next, processing by the request receiver 311 and the schedule checking unit 313 in a case where a receiver's form of receiving is the "forward" for a shipment request from the sending side terminal 5 will be described with reference to Fig. 32. The request receiver 311 registers, as shipment request information 322a, in the request receiving file 332, information entered on the request information entering screen 311 (Fig. 17) displayed on the sending side terminal 5 and sent to the request receiver 311 by the sender. Here, a requested date, requesting person information, receiver information, information on a desired delivery date and time and package information are obtained from inputs onto the request information entering screen 321. Then, the request receiver 311 outputs receiver's member number 323 and information 324 on the desired delivery date and time to the schedule checking unit 313. Here, the member number is "bbb" and the desired delivery date is October 8, 2001. The schedule checking unit 313 searches the delivery form specifying schedule file 333 by using the member number 323 and obtains the receiving form specifying schedule 327 of the member bbb in order to check whether or not he is available for receiving on October 8, 2001, that is the desired delivery date.

In this example, as shown in a part surrounded by a thick line in the receiving form specifying schedule 327, it is specified for "forward". Therefore, the schedule checking unit 313 sets ON the "F" flag of the receiving form in the shipment request information 322b in the request receiving file 332, and registers the nearest deliverable date in the date and the time-zone of the delivery schedule 326. Further, the member file 335 is searched based on the member number "bbb" and the forwarding information 328 of the member "bbb" is obtained. Then, it is registered in the forwarding place information column 329 of the shipment request information 322b.

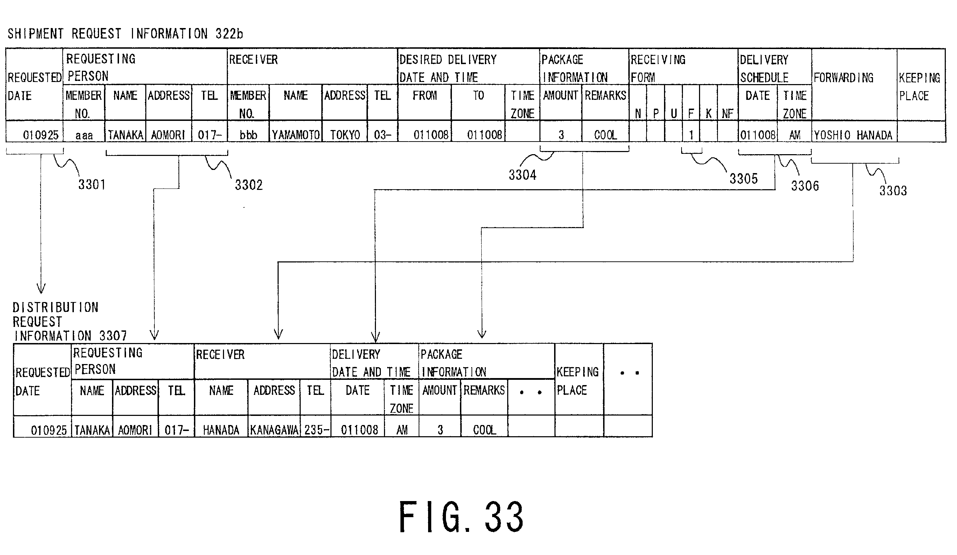

Next, processing by the distribution request information generator 317 following the processing in Fig. 32 will be described with reference to Fig. 33. The distribution request information generator 317 uses a shipment request date 3301, the name, the address and the telephone number (TEL) of the requesting person information 3302, package information 3304 including an amount and remarks, the "F" flag 3305 under the receiving form, and the delivery schedule 3306, which are included in the delivery request information 322b stored in the request receiving file 332 to generate distribution request information 3307 in the distribution request information file 331. Then, the distribution request information generator 317 registers the distribution request information 3307 in the distribution request information file 331 and sends it to the distributor computer 9. However, a configuration may be possible where the content of the distribution request information file 331 is sent in response to an access by the distributor computer 9.

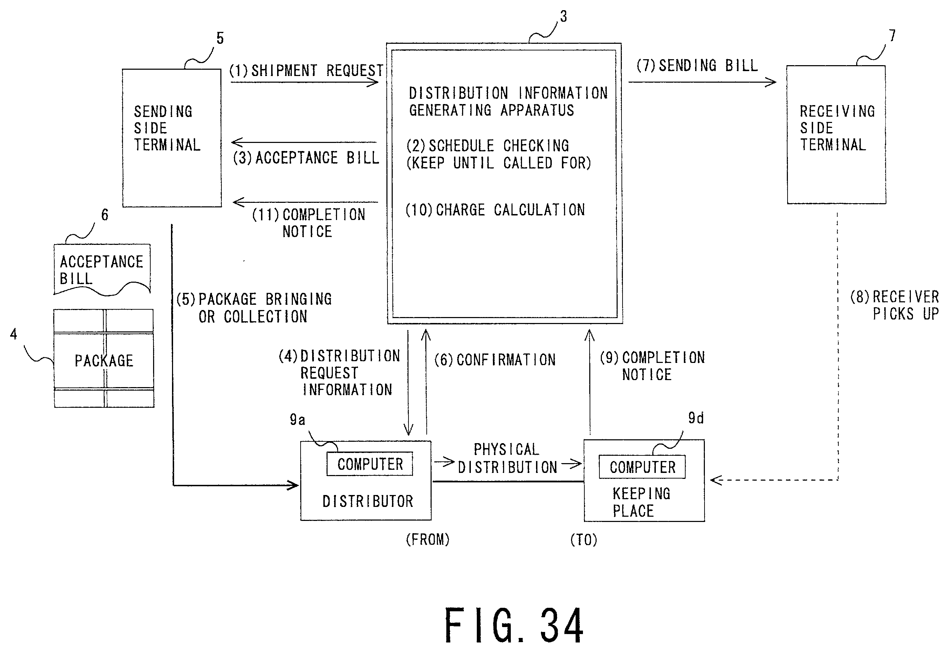

Fig. 34 shows a processing flow in a case where a form of receiving by a receiver is "keep until called for" for a shipment request from the sending side terminal 5. First of all, the distribution information generating apparatus 3 receives a shipment request from the sending side terminal 5 (step (1)). Incidentally, the distribution information generating apparatus 3 sends information for a shipment request entering screen information to the sending side terminal 5 in response to an access by the sending side terminal 5. Then, the sending side terminal 5 receives the information for the shipment request entering screen and displays the shipment request entering screen as shown in Fig. 17, for example, on the display device. Then, the sender enters required information on the shipment request entering screen and clicks a request button. Thus, a shipment request is sent from the sending side terminal 5 to the distribution information generating apparatus 3.

The request receiver 311 of the distribution information generating apparatus 3 receives the shipment request from the sending side terminal 5 and registers it in the request receiving file 332. Then, the schedule checking unit 313 performs schedule checking processing for the receiver or the like (step (2)). The detail will be described later. Here, it is assumed that it is determined as keeping and a delivery form including the delivery schedule is also determined. Here, the delivery schedule information is registered in the receiver's schedule information. Then, the request receiver 311 sends e-mail, for example, as a delivery acceptance notice to the sender (step (3)). The sender uses the sending side terminal 5 to receive the mail of the delivery acceptance notice. An example of the delivery acceptance notice is shown in Fig. 22.

Next, the distribution request information generator 317 of the distribution information generating apparatus 3 generates distribution request information. Then, the distribution request information generator 317 registers in the distribution request information file 331 and sends to the distributor computer 9a, the distribution request information (step (4)). When the distributor computer 9a receives the distribution request information from the distribution request information generator 317, the distributor computer 9a registers it in the distribution request information file (not shown) in the distributor computer 9a.

Based on the distribution request information, the distributor collects a package 4 if a collection is required or waits until the sender brings the package 4 if "bringing" is designated (step (5)). Incidentally, the distributor computer 9a may print a package bill based on the distribution request information. In that case, the package bill is pasted on the package 4. When the distributor receives the package 4 from the sender, an acceptance bill 6 sent from the distribution information generating apparatus 3 may be provided by the sender in order to check the shipment request.

Once the distributor receives the package 4, the distributor performs a confirmation input for the distribution information generating apparatus 3 (step (6)). That is, when the distributor computer 9a accesses the distribution information generating apparatus 3, the confirmation information entering unit 319 sends information for a confirmation information entering screen to the distributor computer 9a. The distributor computer 9a displays the confirmation information entering screen on the display device.

Here, for the confirmation information at the starting point of the physical distribution, the distributor enters information in the delivery starting information entering field 231 and clicks the delivery start button 232. Then, the distributor computer 9a sends the delivery starting information to the confirmation information entering unit 319 in the distribution information generating apparatus 3. The confirmation information entering unit 319 registers the delivery starting information received from the distributor computer 9a in the history file 336. For example, points are given to the sender at this stage.

Further, the request receiver 331 sends e-mail as a sending bill to the receiver (step (7)). The receiver receives the sending bill by operating the receiving side terminal 7. The sending bill includes information such as sender's name, the keeping place, and the delivery date and time zone. Then, the distributor delivers the package 4 to the keeping place. The keeping place may be distributor's window or storage place, a convenience store, or other agents. The receiver goes to the keeping place when he/she has time in order to pick up the package 4 (step (8)).

When the receiver receives the package, a completion notice is sent from the distributor computer 9b to the distribution information generating apparatus 3 (step (9)). In this processing, when the distributor computer 9b accesses the distribution information generating apparatus 3, the distribution information generating apparatus 3 returns information for a confirmation entering screen to the distributor computer 9b. The distributor computer 9b receives the information for the confirmation entering screen and displays the screen as shown in Fig. 23, for example. Here, when information is entered in the delivery completion information entering filed 233 in Fig. 23 and then the delivery complete button 234 is clicked, the distributor computer 9b sends the delivery complete information to the confirmation information entering unit 319 of the distribution information generating apparatus 3. The confirmation information entering unit 319 receives the delivery completion information and then registers the information in the history file 336. Then, charge calculation is performed again if necessary (step (10)). If not necessary, this may be omitted. Further, though not shown, points for keeping are given to the receiver.

Finally, the confirmation information entering unit 319 sends e-mail, for example, as a delivery completion notice to the sender in response to the delivery completion notice from the distributor computer 9d (step (11)). The sender receives the completion notice by operating the sending side terminal 5.

Through the processing flow as above, the sender can confirm that the receiver can receive the package. Then, the sender can hand over the package to the distributor and send it without anxiety. The receiver can also pick up the package easily since the delivery to the keeping place is performed in accordance with his/her schedule information registered in advance and he/she is informed of the delivery date in advance through the sending bill or the like. The distributor can also eliminate inefficient delivery that delivery is performed for the unavailable receiver, leading to the cost reduction.

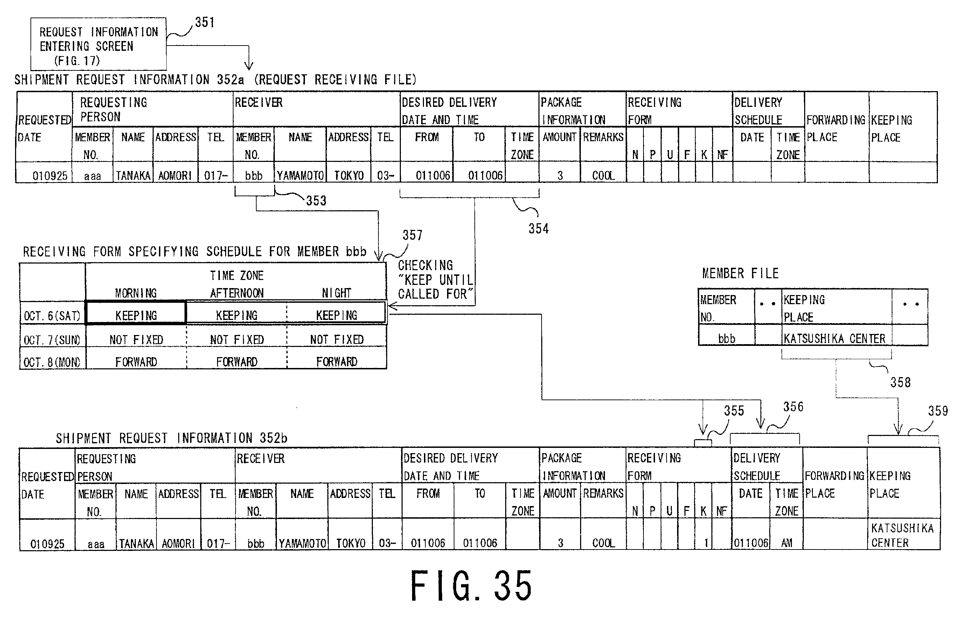

Next, processing by the request receiver 311 and the schedule checking unit 313 in a case where a receiver's form of receiving is "keep until called for" for a shipment request from the sending side terminal 5 will be described with reference to Fig. 35. The request receiver 311 registers, as shipment request information 352a, in the request receiving file 332 information entered on the request information entering screen 351 (Fig. 17) displayed on the sending side terminal 5 and sent to the request receiver 311 by the sender. Here, a requested date, requesting person information, receiver information, information on desired delivery date and time and package information are obtained from inputs onto the request information entering screen 351. Then, the request receiver 311 outputs receiver's member number 353 and information 354 on the desired delivery date and time to the schedule checking unit 313. Here, the member number is "bbb" and the desired delivery date is October 6, 2001. The schedule checking unit 313 searches the delivery form specifying schedule file 333 by using the member number 353 and obtains the receiving form specifying schedule 357 of the member bbb in order to check whether or not he is available for receiving on October 6, 2001, that is the desired delivery day.

In this example, it is "keep until called for" for all time-zone on October 6, and AM (a part surrounded by a thick line) which is the earliest time-zone on October 6 in the receiving form specifying schedule 357 is selected. Therefore, the schedule checking unit 313 turns ON the "K" flag under the receiving form in the shipment request information 352b in the request receiving file 332. Then, the schedule checking unit 313 registers the desired delivery date in the date field under the delivery schedule 356 and the earliest time-zone selected among those on October 6 in the field of time-zone. Further, the member file 335 is searched by using the member number "bbb" and the keeping place information 358 for the member "bbb" is obtained. Then, it is registered in the keeping place column 359 under the shipment request information 352b.

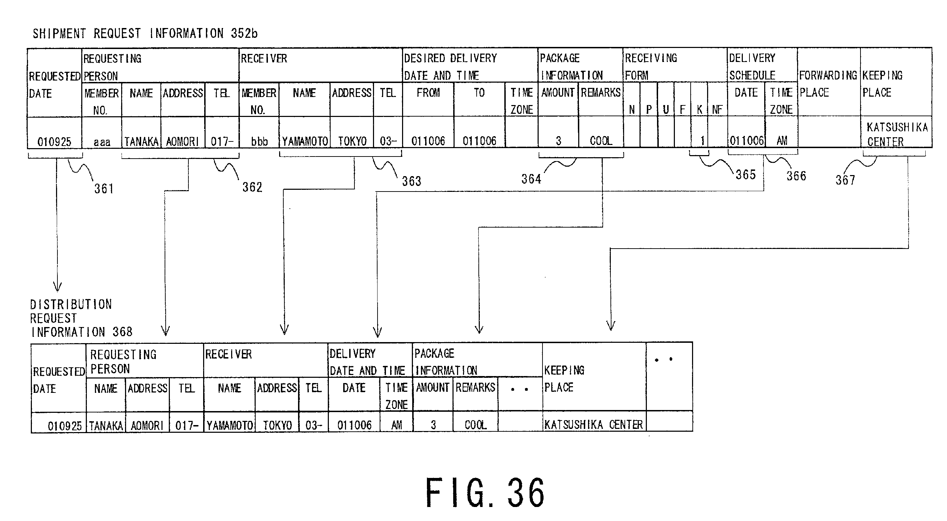

Next, processing by the distribution request information generator 317 following the processing in Fig 35 will be described with reference to Fig. 36. The distribution request information generator 317 uses a shipment request date 361, the name, the address and the telephone number (TEL) of the requesting person information 362, the name, the address and the telephone number (TEL) of the receiver information 363, package information 364 including an amount and remarks, the "K" flag 365 under the receiving form, the delivery schedule 366, and the keeping place 367, which are included in the delivery request information 352b stored in the request receiving file 332 to generate distribution request information 368 in the distribution request information file 331. Then, the distribution request information generator 317 registers the distribution request information 368 in the distribution request information file 331 and sends it to the distributor computer 9. However, a configuration may be possible where the content of the distribution request information file 331 is sent to the distributor computer 9 in response to an access by the distributor computer 9.

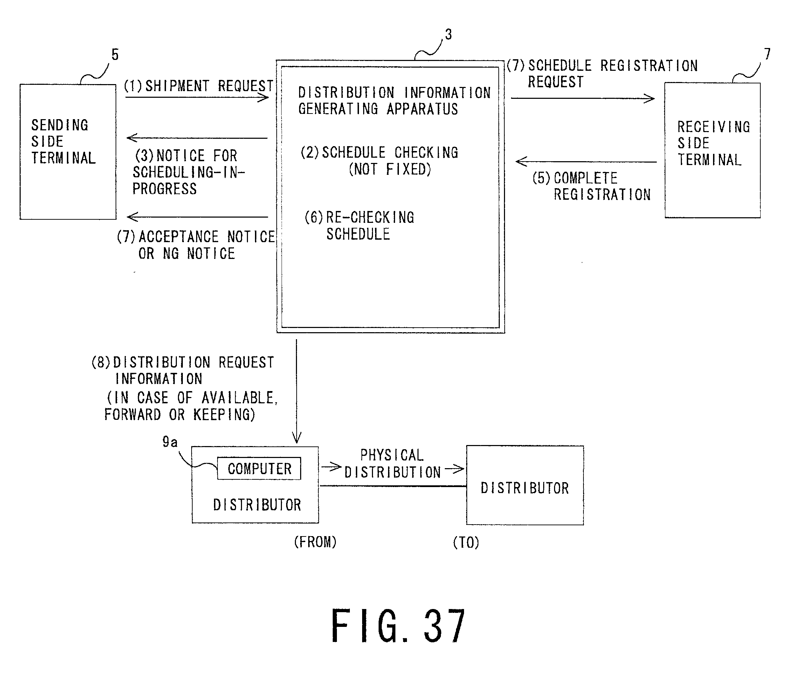

Fig. 37 shows a processing flow in a case where a form of receiving by a receiver is "not fixed" for a shipment request from the sending side terminal 5. First of all, the distribution information generating apparatus 3 receives a shipment request from the sending side terminal 5 (step (1)). Incidentally, the distribution information generating apparatus 3 sends information for a shipment request entering screen information to the sending side terminal 5 in response to an access by the sending side terminal 5. Then, the sending side terminal 5 receives the information for the shipment request entering screen and displays the shipment request entering screen as shown in Fig. 17, for example, on the display device. Then, the sender enters required information on the shipment request entering screen and clicks a request button. Thus, a shipment request is sent from the sending side terminal 5 to the distribution generating apparatus 3.

The request receiver 311 of the distribution information generating apparatus 3 receives the shipment request from the sending side terminal 5 and registers it in the request receiving file 332. Then, the schedule checking unit 313 performs schedule checking processing for the receiver or the like (step (2)). The detail will be described later. Here, it is assumed that it is determined as "not fixed". Then, the request receiver 311 sends e-mail, for example, as a notice for scheduling-in-progress to the sender (step (3)). The sender uses the sending side terminal 5 to receive the mail of the scheduling-in-progress notice.

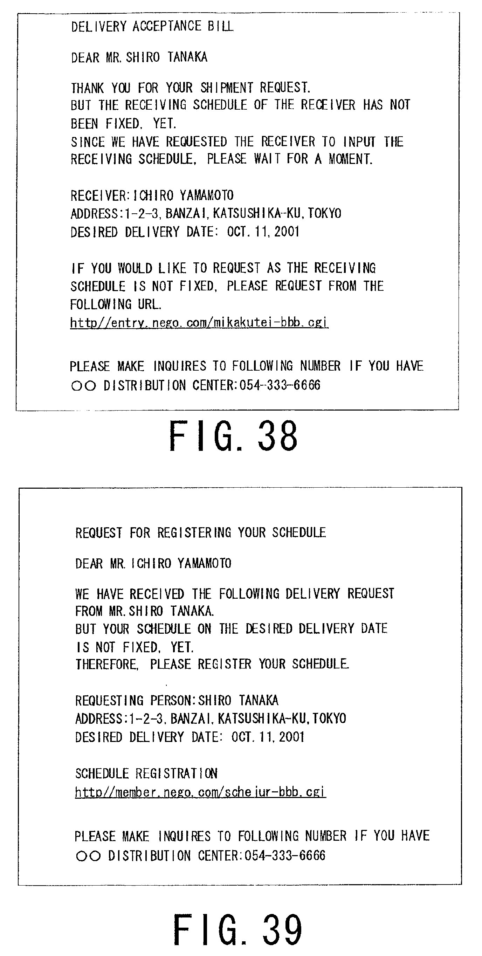

An example of the mail of the scheduling-in-progress notice is shown in Fig. 38. Here, it includes a sentence that the receiver's schedule is not fixed, the receiver, the receiver's address, the desired delivery date, and a link to a Web page which is accessed when a shipment request is forced by leaving the receiving schedule not fixed. When the sender can wait until the receiver inputs his/her schedule, no action is taken for the notice mail. On the other hand, the sender cannot wait until the receiver inputs his/her schedule, the link to the Web page, which is accessed when a shipment request is forced, is clicked. Thus, the sending side terminal 5 accesses the distribution information generating apparatus 3, and screen information for forcing a shipment request in which the shipment request information entered in Fig. 17 is embedded is sent to the sending side terminal 5.

Returning to the description on Fig. 37, the request receiver 311 informs the receiver of the schedule registration request by using e-mail, for example, next (step(4)). The receiver receives the e-mail on the schedule registration request by operating the receiving side terminal 7. Fig. 39 show one example of the e-mail on the schedule registration request. In this example, the schedule on desired delivery date is prompted to input by providing the shipment requesting person, the address of the shipment requesting person and the desired delivery date. Incidentally, in order to simplify the schedule registration, an URL (Uniform Resource Locator) for the receiver's schedule registration is embedded in this example.

For example, when the receiver clicks the URL, the receiving side terminal 7 access the registration processor 315 of the distribution information generating apparatus 3. Then, the schedule registration is completed through the interactions between the registration processor 315 and the receiving side terminal 7 (step (5)). Then, the schedule checking unit 313 checks the deliverability on the desired delivery date and time in the shipment request again (step (6)). A acceptance bill for the "available for receiving", "forward", or "keep until called for" or an NG notice for the "not available for receiving" is sent by e-mail, for example, to the sender (step (7)). For the NG notice, following processes are the same as the one in Fig. 28.

In the case of "available for receiving", "forward", or "keep until called for", the distribution request information generator 317 generates distribution request information from the shipment request and sends the distribution request information to the distributor computer 9a (step (8)). For the "available for receiving", following processes are the same as the one in Fig. 21. For the "forward", following processes are the same as the one in Fig. 31. For the "keep until called for", following processes are the same as the one in Fig. 35.

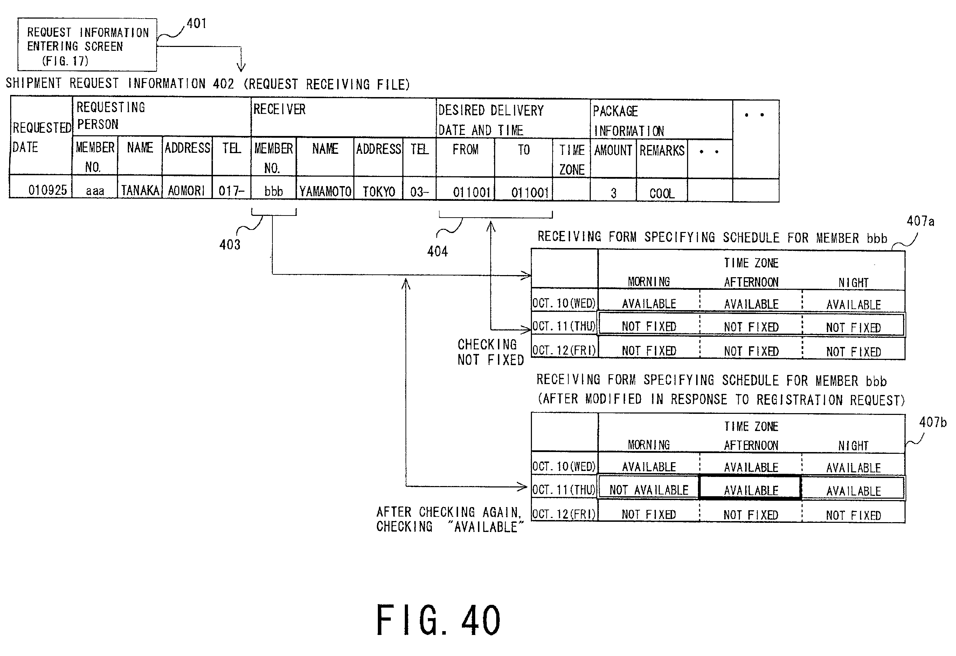

Next, processing by the request receiver 311 and the schedule checking unit 313 in a case where a receiver's form of receiving is "not fixed" for a shipment request from the sending side terminal 5 will be described with reference to Fig. 40. The request receiver 311 registers, as shipment request information 402, in the request receiving file 332 information entered on the request information entering screen 401 (Fig. 17) displayed on the sending side terminal 5 and sent to the request receiver 311 by the sender. Here, a requested date, requesting person information, receiver information, information on desired delivery date and time and package information are obtained from inputs onto the request information entering screen 401. Then, the request receiver 311 outputs receiver's member number 403 and information 404 on the desired delivery date and time to the schedule checking unit 313. Here, the member number is "bbb" and the desired delivery date is October 11, 2001. The schedule checking unit 313 searches the delivery form specifying schedule file 333 by using the member number 403 and obtains the receiving form specifying schedule 407a of the member bbb in order to check whether or not he is available for receiving on October 11, 2001.

In this example, it is "not fixed" for all time-zones on October 11. Therefore, the request receiver 311 sends e-mails to the sender and the receiver, respectively. Then, when the receiver registers the schedule on October 11 by using the registration processor 315, the schedule checking unit 313 obtains a receiving form specifying schedule 407b from the receiving form specifying schedule file 333 again to determines "available for receiving", "forward", or "keep until called for" is specified. In this case, PM (a part surrounded by a thick line) that is the earliest time-zone for "available for receiving" among those on October 11 in the receiving form specifying schedule 407b is selected. The following processing is the same as one in the case of "available for receiving".

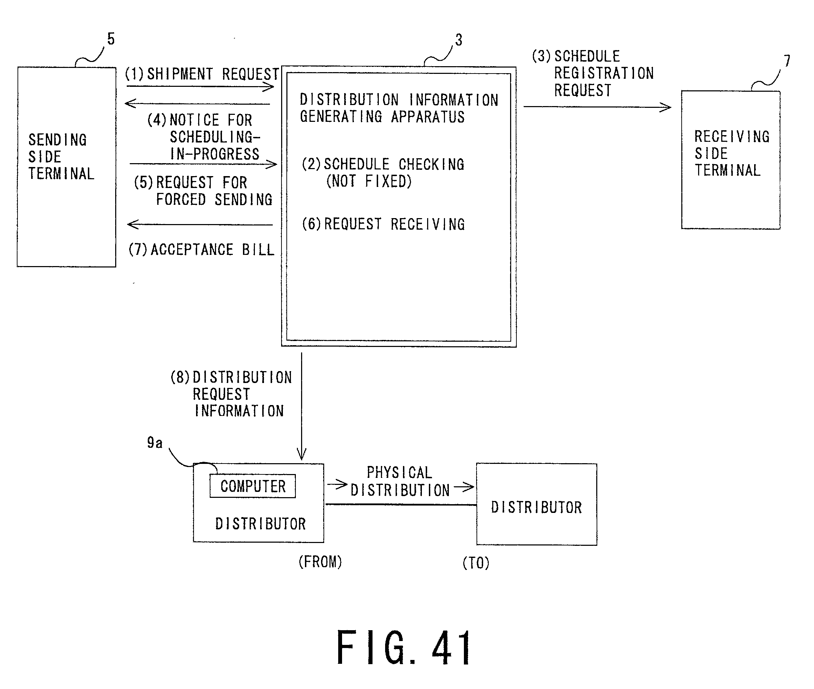

Fig. 37 shows the processing flow in a case where the sender can wail until the receiver inputs his/her schedule. Fig. 41 shows a processing flow in a case where the sender cannot wait until the receiver's schedule input. First of all, the distribution information generating apparatus 3 receives a shipment request from the sending side terminal 5 (step (1)). Incidentally, the distribution information generating apparatus 3 sends information for a shipment request entering screen information to the sending side terminal 5 in response to an access by the sending side terminal 5. Then, the sending side terminal 5 receives the information for the shipment request entering screen and displays a shipment request entering screen as shown in Fig. 17, for example, on the display device. Then, the sender enters required information on the shipment request entering screen and clicks a request button. Thus, a shipment request is sent from the sending side terminal 5 to the distribution information generating apparatus 3.

The request receiver 311 of the distribution information generating apparatus 3 receives the shipment request from the sending side terminal 5 and registers it in the request receiving file 332. Then, the schedule checking unit 313 performs schedule checking processing for the receiver or the like (step (2)). The detail will be described later. Here, it is assumed that it is determined as "not fixed".

Then, the request receiver 311 informs the receiver of a schedule registration request by e-mail, for example (step (3)). The receiver receives the e-mail on the schedule registration request by operating the receiving side terminal 7. One example of the mail on the schedule registration request is as shown in Fig. 39. Incidentally, in order to simplify the schedule registration, an URL (Uniform Resource Locator) for the receiver's schedule registration is embedded in this example.

On the other hand, the request receiver 311 sends e-mail, for example, as a notice for schedule-in-progress to the sender (step (4)). The sender uses the sending side terminal 5 to receive the mail of the scheduling-in-progress notice. One example of the scheduling-in-progress notice mail is shown in Fig. 38. Here, it is assumed that the sender cannot wait until the receiver inputs his/her schedule. Then, the URL embedded in the notice mail is clicked. Thus, the sending side terminal 5 accesses the distribution information generating apparatus 3, and screen information for forcing a shipment request in which the shipment request information entered in Fig. 17 is embedded is sent to the sending side terminal 5.

Then, the sender operates the sending side terminal 5 to send the request for the forced sending to the request receiver 311 of the distribution information generating apparatus 3 (step (5)). Then, the request receiver 311 generates shipment request information and performs request receiving processing by storing it into the request receiving file 332 (step (6)).

The request receiver 311 sends e-mail, for example, as an acceptance bill to the sender (step (7)). The acceptance bill has a content as shown in Fig. 22, for example. However, since the schedule checking is not performed again in the case of Fig. 41, it is uncertain if a given package will be delivered in accordance with the desired delivery date. The distribution request information generator 317 generates distribution request information from the shipment request and registers it in the distribution request information file 331. Then, the distribution request information generator 317 sent the distribution request information to the distributor computer 9a (step (8)). The same processes are performed as the case for "available for receiving" in the following. However, since the distributor may have to visit to the receiver's home two or three times, no points are given to the receiver. If the schedule checking is not well performed as above, substantially the same processing is performed as the conventional processing in the following.

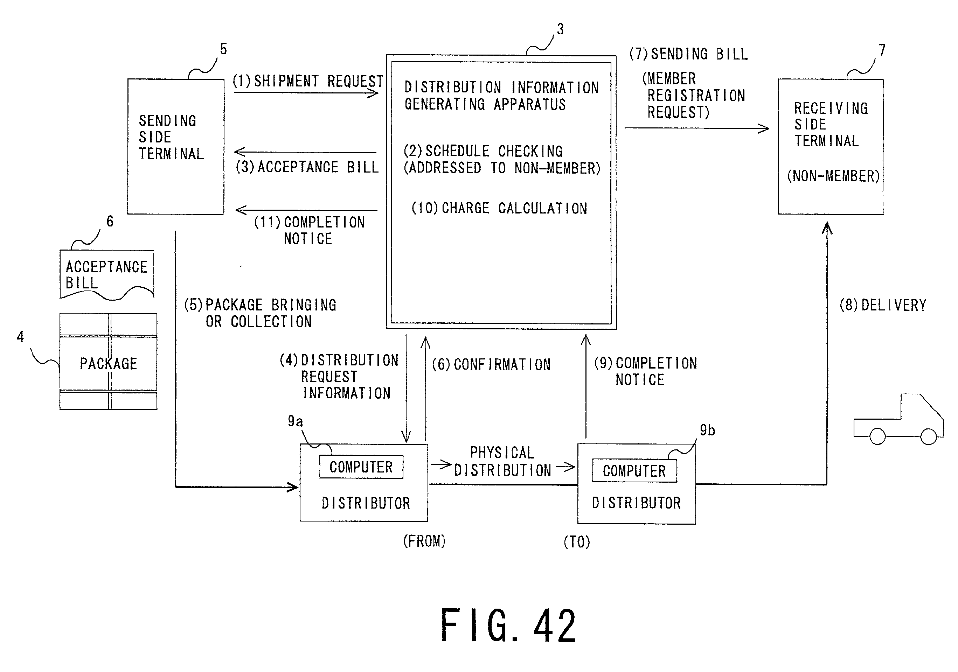

Since, in this embodiment, it is an object to obtain better delivery efficiency through schedule checking, the physical distribution between members registered in the membership is a principle. However, a receiver is not always limited to the member. Fig. 42 shows a processing flow in a case where a request for sending a package to a non member is issued from the sending side terminal 5. First of all, the distribution information generating apparatus 3 receives a shipment request from the sending side terminal 5 (step (1)). Incidentally, the distribution information generating apparatus 3 sends information for a shipment request entering screen to the sending side terminal 5 in response to an access by the sending side terminal 5. Then, the sending side terminal 5 receives the information for the shipment request entering screen and displays the shipment request entering screen as shown in Fig. 17, for example, on the display device. Then, the sender enters required information on the shipment request input screen and clicks a request button.. Thus, a shipment request is sent from the sending side terminal 5 to the distribution information generating apparatus 3.

The request receiver 311 of the distribution information generating apparatus 3 receives the shipment request from the sending side terminal 5 and registers it in the request receiving file 332. Then, the schedule checking unit 313 performs schedule checking processing for the receiver or the like (step (2)). The detail will be described later. Here, it is assumed that it is determined as a shipment request for a non-member since a member number is not specified and no member can be identified from other information. Then, the request receiver 311 sends by e-mail, for example, a delivery acceptance bill to the sender (step (3)). The sender uses the sending side terminal 5 to receive the e-mail of the delivery acceptance bill. For example, a delivery acceptance bill as shown in Fig. 22 is sent from the request receiver 311 to the sender.

Next, the distribution request information generator 317 of the distribution information generating apparatus 3 generates distribution request information. Then, the distribution request information generator 317 registers in the distribution request information file 331 and sends to the distributor computer 9a, the distribution request information (step (4)). When the distributor computer 9a receives the distribution request information from the distribution request information generator 317, the distributor computer 9a registers it in the distribution request information file (not shown) in the distributor computer 9a.

Based on the distribution request information, the distributor collects a package 4 if a collection is required or waits until the sender brings the package 4 if "bringing" is designated (step (5)). Incidentally, the distributor computer 9a may print a package bill based on the distribution request information. In that case, the package bill is pasted on the package 4. When the distributor receives the package 4 from the sender, an acceptance bill 6 sent from the distribution information generating apparatus 3 may be provided by the sender in order to check the shipment request.

Once the distributor receives the package 4, the distributor performs a confirmation input for the distribution information generating apparatus 3 (step (6)). That is, when the distributor computer 9a accesses the distribution information generating apparatus 3, the confirmation information entering unit 319 sends information for confirmation information entering screen to the distributor computer 9a. The distributor computer 9a displays the confirmation information entering screen on the display device. One example of the confirmation information entering screen is the same as one shown in Fig. 23.

Here, for the confirmation information at the starting point of the physical distribution, the distributor enters information in the delivery starting information entering field 231 and clicks the delivery starting button 232. Then, the distributor computer 9a sends the delivery starting information to the confirmation information entering unit 319 in the distribution information generating apparatus 3. The confirmation information entering unit 319 registers the delivery starting information received from the distributor computer 9a in the history file 336.

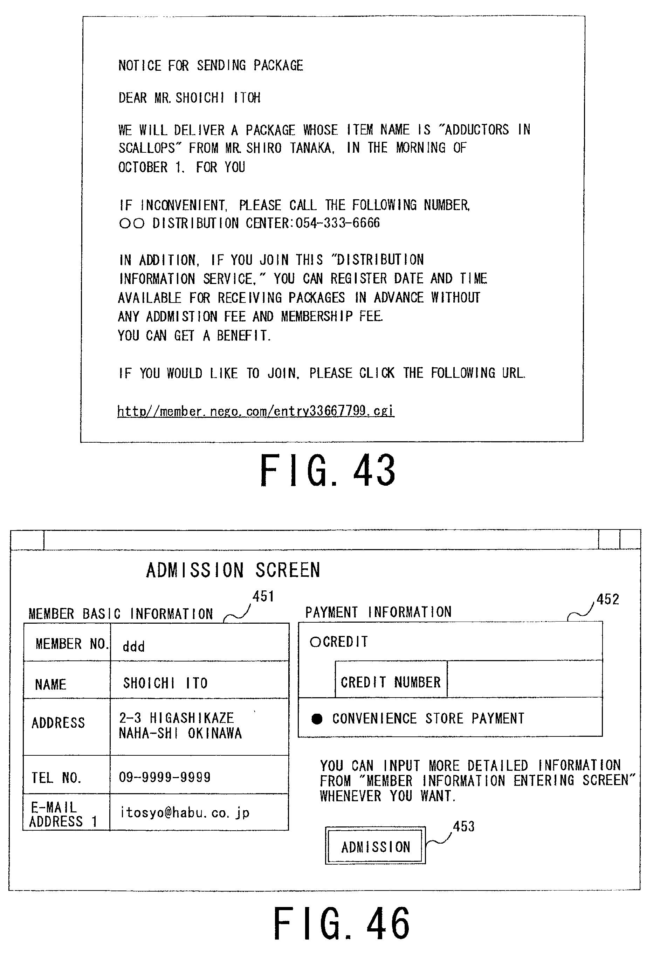

Further, the request receiver 331 sends e-mail as a sending bill including a member registration request to the receiver (step (7)). The receiver receives the sending bill by operating the receiving side terminal 7. One example of the sending bill is shown in Fig. 43. In the example in Fig. 43, the sending bill includes information such as sender's name, a delivered item name, and a delivery date and time zone. It also includes a sentence for the subscription guidance, and a URL of the simplified membership registration screen is embedded. When the receiver clicks this URL, the simplified membership registration screen can be displayed easily. The simplified membership registration screen will be described in detail later.

Then, the distributor delivers the package 4 to the receiver (step (8)). Once the delivery has completed, the distributor sends a completion notice from the distributor computer 9b to the distribution information generating apparatus 3 (step (9)). In this processing, when the distributor computer 9b accesses the distribution information generating apparatus 3, the distribution information generating apparatus 3 returns information for a confirmation entering screen to the distributor computer 9b. The distributor computer 9b receives the information for the confirmation entering screen and displays the screen as shown in Fig. 23, for example. Here, when information is entered in the delivery completion information entering filed 233 in Fig. 23 and then the delivery complete button 234 is clicked, the distributor computer 9b sends the delivery completion information to the confirmation information entering unit 319 of the distribution information generating apparatus 3. The confirmation information entering unit 319 receives the delivery completion information and then registers the information in the history file 336. Then, charge calculation is performed again if necessary (step (10)). It may be omitted if not necessary.

Finally, the confirmation information entering unit 319 sends e-mail, for example, as a delivery completion notice to the sender in response to the delivery completion notice from the distributor computer 9b (step (11)). The sender receives the completion notice by operating the sending side terminal 5.

Through the processing flow as above, the sender can request the distribution information center to send a package even to a receiver who is not a member. Conveniently, the receiver can be informed of the delivery date and time zone by the sending bill in advance.

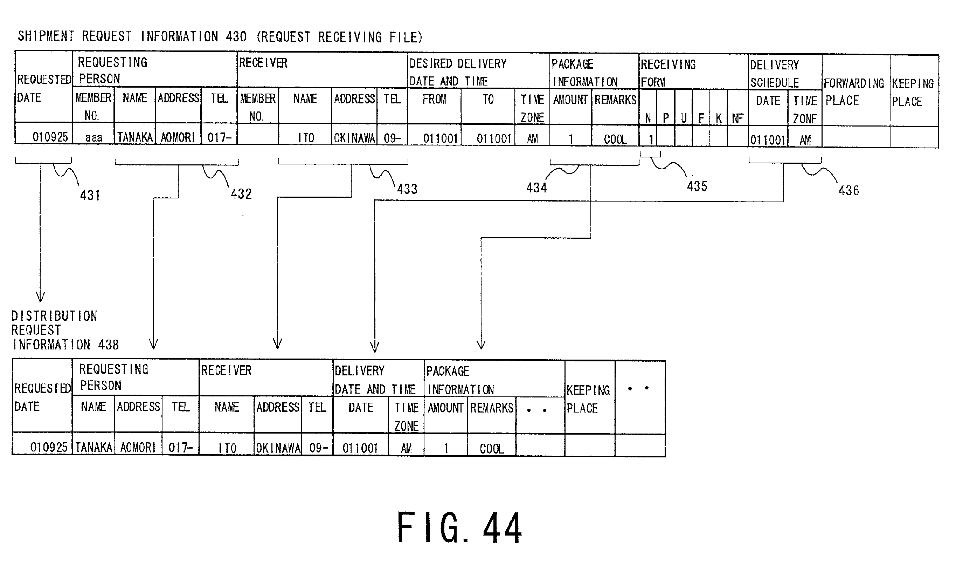

Next, processing by the distribution request information generator 317 will be described with reference to Fig. 44. The distribution request information generator 317 uses a shipment request date 431, the name, the address and the telephone number (TEL) of the requesting person information 432, the name, the address and the telephone number (TEL) of the receiver information 433, package information 434 including an amount and remarks, the normal "N" flag 435 under the receiving form, and the delivery schedule 436, which are included in the delivery request information 430 stored in the request receiving file 332, to generate distribution request information 438 in the distribution request information file 331. Then, the distribution request information generator 317 registers the distribution request information 438 in the distribution request information file 331 and sends it to the distributor computer 9. However, a configuration may be possible where the content of the distribution request information file 331 is sent in response to an access by the distributor computer 9.

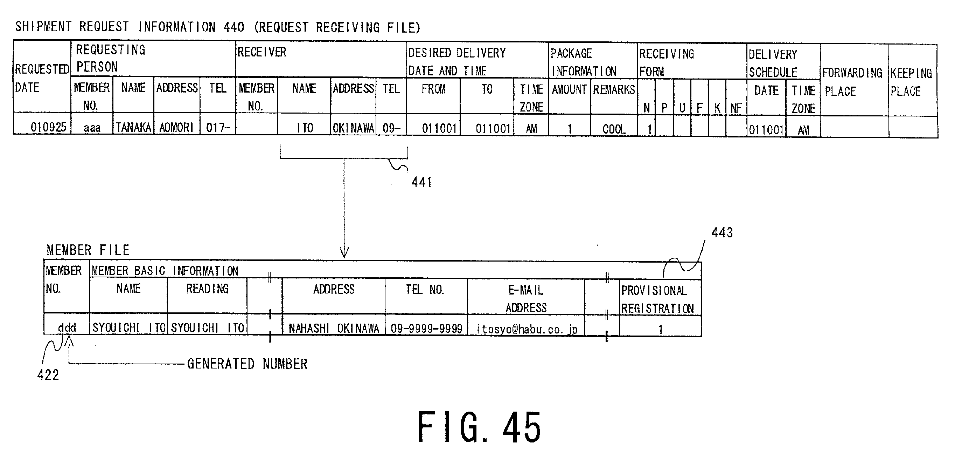

Further, the receiver is a non-member, and the membership registration request is sent along with the sending bill. The registration processor 315 performs processing as shown in Fig. 45 such that the non-member receiver can perform the membership registration easily. The registration processor 315 registers the receiver information 441 in the generated shipment request information 440 into the member file 335. At that time, a member number 442 is generated and registered and "provisional registration" flag 443 is turned ON in order to indicate that it is not real registration. Thus, the receiver can perform the membership registration easily by using the generated shipment request information when he/she performs the registration.

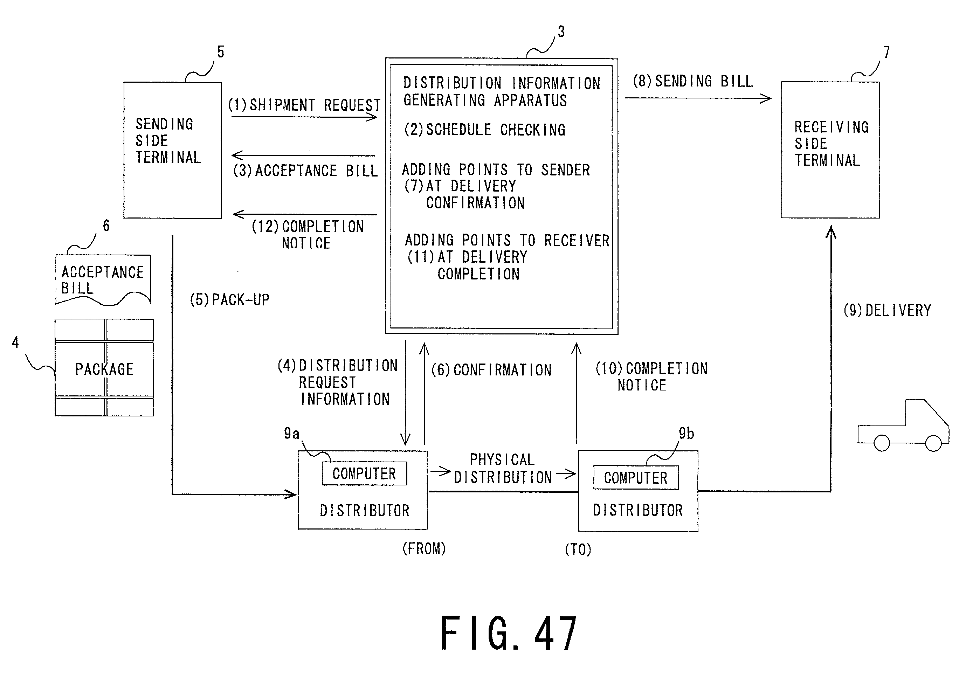

Next, Fig. 46 shows one example of an admission screen displayed on the receiving side terminal 7 when a URL embedded in the sending bill in Fig. 43 is clicked. Incidentally, the receiving side terminal 7 accesses the URL embedded in the sending bill. The registration processor 315 of the distribution information generating apparatus 3 reads out the receiver information stored in the member file 335 and generates and sends information for the admission screen to the receiving side terminal 7. The receiving side terminal 7 displays the screen as shown in Fig. 46, for example, on the display device. Here, based on the information input as the receiver information by the sender, the information is displayed in a form being embedded in the member basic information field 451. The name, address, telephone number and e-mail address 1 except for the member number (No.) can be modified. Further, a radio button is provided in the payment information field 452 so as to select either one of "credit card" or "convenience store payment" which is payment at a convenience store. Incidentally, in order to select payment by a credit card, a field for entering a credit card number is also provided. In addition, an admission button 453 is clicked at the time of the admission. When clicked, the entered information is sent to the registration processor 315. The registration processor 315 registers the received information in the member file 335.

Next, grant of points to members will be described with reference to Figs. 47 to 49. Processing for shipment request and grant of points in a case where a sender and a receiver are members will be described with reference to Fig. 47. First of all, the distribution information generating apparatus 3 receives a shipment request from the sending side terminal 5 (step (1)). Incidentally, the distribution information generating apparatus 3 sends information for a shipment request entering screen to the sending side terminal 5 in response to an access by the sending side terminal 5. Then, the sending side terminal 5 receives the information for the shipment request entering screen and displays the shipment request entering screen as shown in Fig. 17, for example, on the display device. Then, the sender enters required information on the shipment request entering screen and. clicks a request button. Thus, a shipment request is sent from the sending side terminal 5 to the distribution information generating apparatus 3.

The request receiver 311 of the distribution information generating 3 receives the shipment request from the sending side terminal 5 and registers it in the request receiving file 332. Then, the schedule checking unit 313 performs schedule checking processing for the receiver or the like (step (2)). The detail will be described later. Here, it is assumed that the "available for receiving" is determined and a delivery form including a delivery schedule is determined. Incidentally, at this stage, information on the delivery schedule is registered in the receiver's schedule information. Then, the request receiver 311 sends by e-mail, for example, a delivery acceptance bill to the sender (step (3)). The sender uses the sending side terminal 5 to receive the e-mail of the delivery acceptance bill. For example, a delivery acceptance bill as shown in Fig. 22 is sent from the request receiver 311 to the sender.

Next, the distribution request information generator 317 of the distribution information generating apparatus 3 generates distribution request information. Then, the distribution request information generator 317 registers in the distribution request information file 331 and sends to the distributor computer 9a, the distribution request information (step (4)). When the distributor computer 9a receives the distribution request information from the distribution request information generator 317, the distributor computer 9a registers it in the distribution request information file (not shown) in the distributor computer 9a.

Based on the distribution request information, the distributor collects a package 4 if a collection is required or waits until the sender brings the package 4 if "bringing" is designated. Incidentally, the distributor computer 9a may print a package bill based on distribution request information. In that case, the package bill is pasted on the package 4. Further, when the distributor receives the package 4 from the sender, an acceptance bill 6 sent from the distribution information generating apparatus 3 may be provided by the sender in order to check the shipment request.

Once the distributor receives the package 4, the distributor performs a confirmation input for the distribution information generating apparatus 3 (step (6)). That is, when the distributor computer 9a accesses the distribution information generating apparatus 3, the confirmation information entering unit 319 sends information for a confirmation information entering screen to the distributor computer 9a. The distributor computer 9a displays the confirmation information entering screen on the display device. One example of the confirmation information entering screen is the same as the one shown in Fig. 23.

Here, for the confirmation information at the starting point of the physical distribution, the distributor enters information in the delivery starting information entering field 231 and clicks the delivery start button 232. Then, the distributor computer 9a sends the delivery starting information to the confirmation information entering unit 319 in the distribution information generating apparatus 3. The confirmation information entering unit 319 registers the delivery starting information received from the distributor computer 9a in the history file 336.

Sending side points are given to the sender at this stage (step (7)). That is, the confirmation information entering unit 319 registers the sending side points in the point file 337 for the sender, and further increases a cumulative point value of the sender included in the member file 335 by the sending side points given at this time. The sending side points are given for each sending, and bonus points may be given for every 10 times, for example.

Further, the request receiver 331 sends e-mail as a sending bill to the receiver (step (8)). The receiver receives the sending bill by operating the receiving side terminal 7. The sending bill includes information such as sender's name and a delivery date and time zone. Then, the distributor delivers the package 4 to the receiver (step (9)). Once the delivery has completed, the distributor sends a completion notice from the distributor computer 9b to the distribution information generating apparatus 3 (step (10)). In this processing, when the distributor computer 9b accesses the distribution information generating apparatus 3, the distribution information generating apparatus 3 returns information for a confirmation entering screen to the distributor computer 9b. The distributor computer 9b receives the information for the confirmation entering screen and displays the screen as shown in Fig. 23, for example. Here, when information is entered in the delivery completion information entering filed 233 in Fig. 23 and then the delivery complete button 234 is clicked, the distributor computer 9b sends the delivery complete information to the confirmation information entering unit 319 of the distribution information generating apparatus 3. The confirmation information entering unit 319 receives the delivery completion information and then registers the information in the history file 336.

Then, the confirmation information entering unit 319 references the receiving status data included in the delivery completion information and, if the delivery has completed by following the delivery schedule, gives receiving side points to the receiver (step (11)). That is, the receiving side points are registered in the point file 337, and the receiving side points given at this time are added to the cumulative points of the receiver included in the member file 335. Here, since the receiver schedule is "available for receiving", delivery completion points, which are given if the delivery has completed by following the delivery schedule, are given as the receiving side points. Incidentally, if the receiver schedule information is "keep until called for", keeping points corresponding to the distribution cost saved by the non-delivery are given.

Finally, the confirmation information entering unit 319 sends e-mail, for example, as a delivery completion notice to the sender in response to the delivery completion notice from the distributor computer 9b (step (12)). The sender receives the completion notice by operating the sending side terminal 5.

By giving points to the sender and the receiver in accordance with the above-described processing flow, the usage is promoted and the registration of more accurate schedule information is prompted. The registration of more accurate schedule information allows more efficient delivery.

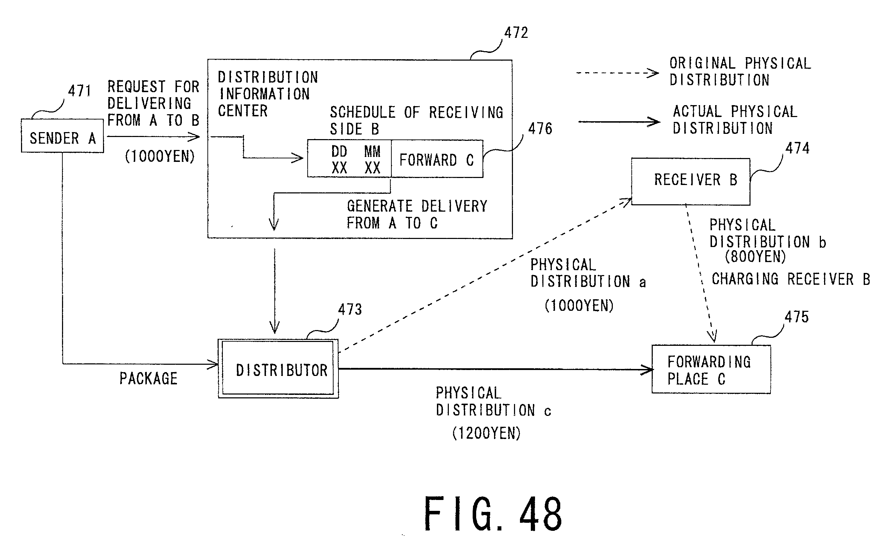

While the delivery completion points and the keeping points have been described as the receiving side points, forwarding points are given corresponding to the distribution cost saved by delivering a package to a forwarding place directly if the receiver schedule information is "forward". The principle will be described with reference to Fig. 48. A request for sending from a sender A to a receiver B is sent from a sending side A (471) to a distribution information center 472. Incidentally, a delivery charge from the sender A to the receiver B is 1000 yen. The distribution information generating apparatus 3 in the distribution information center 472 checks a schedule 476 of the receiver B. Here, it is assumed that the desired delivery date is "forward" to a forwarding place C. In this case, the distribution information generating apparatus 3 of the distribution information center 472 generates a request for sending from the sender A to the receiver B and a distribution request information from the receiver A to the forwarding place C. This distribution request information is sent to a computer of the distributor 473.

In this case, a package is delivered from the sender A (471) to the forwarding place C (475). Incidentally, this delivery is physical distribution c and costs 1,200 yen. On the other hand, payment by the sender A (471) is 1,000 yen for physical distribution a which is the delivery from the sender A to the receiver B intended by the sender A (471). The payment by the receiver B (474) is 800 yen for the distribution b which is the delivery from the receiver B (474) to the forwarding place C instructed by the receiver B (474). Therefore, the distributor 473 gets 1,800 yen by adding the payment, 1,000 yen by the sender A (471) and the payment, 800 yen, by the receiver B (474). However, actually, the delivery is performed from the sender A to the forwarding place C directly, and the charge is 1,200 yen. Since the amount, 1,800 yen - 1,200 yen = 600 yen, is an extra income for the distributor, a predetermined ratio of the amount 600 yen is returned as the forwarding points, for example.

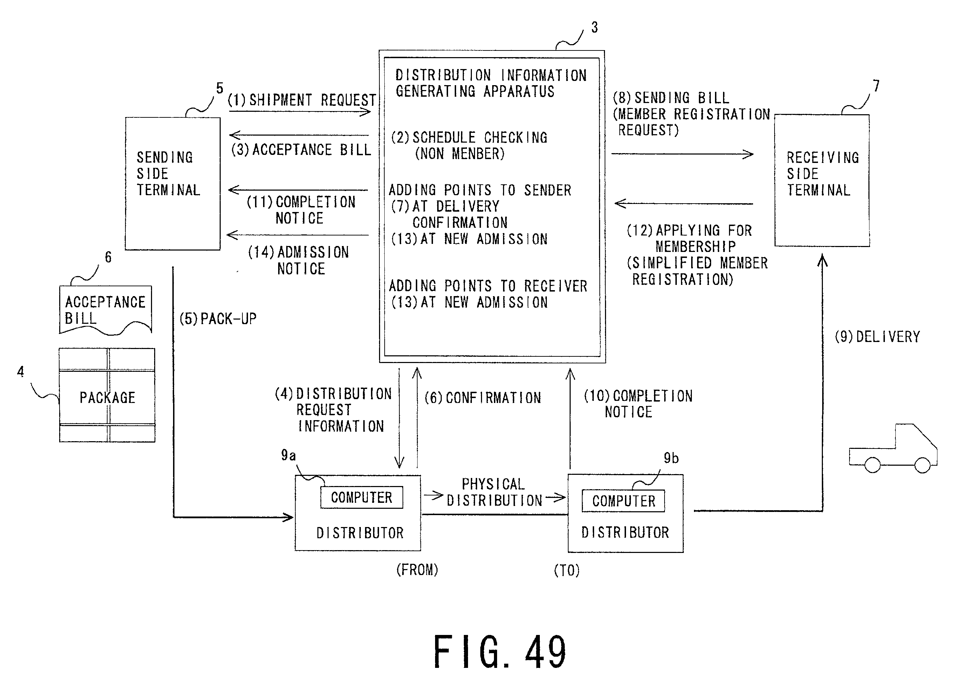

Next, processing for shipment request and grant of points in a case where a receiver is a non-member will be described with reference to Fig. 49. First of all, the distribution information generating apparatus 3 receives a shipment request from the sending side terminal 5 (step (1)). Incidentally, the distribution information generating apparatus 3 sends information for a shipment request entering screen to the sending side terminal 5 in response to an access by the sending side terminal 5. Then, the sending side terminal 5 receives the information for the shipment request entering screen and displays the shipment request entering screen as shown in Fig. 17, for example, on the display device. Then, the sender enters required information on the shipment request input screen and clicks a request button. Thus, a shipment request is sent from the sending side terminal 5 to the distribution information generating apparatus 3.

The request receiver 311 of the distribution information generating apparatus 3 receives the shipment request from the sending side terminal 5 and registers it in the request receiving file 332. Then, the schedule checking unit 313 performs schedule checking processing for the receiver or the like (step (2)). The detail will be described later. Here, since the receiver is a non-member, the schedule information is not registered. Therefore, the delivery will be processed as the general delivery. Then, the request receiver 311 sends by e-mail, for example, a delivery acceptance bill to the sender (step (3)). The sender uses the sending side terminal 5 to receive the e-mail of the delivery acceptance bill. For example, a delivery acceptance bill as shown in Fig. 22 is sent from the request receiver 311 to the sender.

Next, the distribution request information generator 317 of the distribution information generating apparatus 3 generates distribution request information. Then, the distribution request information generator 317 registers in the distribution request information file 331 and sends to the distributor computer 9a, the distribution request information (step (4)), When the distributor computer 9a receives the distribution request information from the distribution request information generator 317, the distributor computer 9a registers it in the distribution request information file (not shown) in the distributor computer 9a.

Based on the distribution request information, the distributor collects a package 4 if a collection is required or waits until the sender brings the package 4 if "bringing" is designated (step (5)). Incidentally, the distributor computer 9a may print a package bill based on distribution request information. In that case, the package bill is pasted on the package 4. Further, when the distributor receives the package 4 from the sender, an acceptance bill 6 sent from the distribution information generating apparatus 3 may be provided by the sender in order to check the shipment request.

Once the distributor receives the package 4, the distributor performs a confirmation input for the distribution information generating apparatus 3 (step (6)). That is, when the distributor computer 9a accesses the distribution information generating apparatus 3, the confirmation information entering unit 319 sends information for confirmation information entering screen to the distributor computer 9a. The distributor computer 9a displays the confirmation information entering screen on the display device. One example of the confirmation information entering screen is the same as the one shown in Fig. 23.

Here, for the confirmation information at the starting point of the distribution, the distributor enters information in the delivery starting information entering field 231 and clicks the delivery start button 232. Then, the distributor computer 9a sends the delivery starting information to the confirmation information entering unit 319 in the distribution information generating apparatus 3. The confirmation information entering unit 319 registers the delivery starting information received from the distributor computer 9a in the history file 336.

Sending side points are given to the sender at this stage (step (7)). That is, the confirmation information entering unit 319 registers the sending side points in the point file 337 for the sender, and increases a cumulative point value of the sender included in the member file 335 by the sending side points given at this time. Further, the request receiver 331 sends e-mail as a sending bill including membership registration request to the receiver (step (8)). The receiver receives the sending bill by operating the receiving side terminal 7. One example of the sending bill is shown in Fig. 43.

Then, the distributor delivers the package 4 to the receiver (step (9)). Once the delivery has completed, the distributor sends a completion notice from the distributor computer 9b to the distribution information generating apparatus 3 (step (10)). In this processing, when the distributor computer 9b accesses the distribution information generating apparatus 3, the distribution information generating apparatus 3 returns information for confirmation entering screen to the distributor computer 9b. The distributor computer 9b receives the information for the confirmation entering screen and displays the screen as shown in Fig. 23, for example. Here, when information is entered in the delivery completion information entering filed 233 in Fig. 23 and then the delivery complete button 234 is clicked, the distributor computer 9b sends the delivery completion information to the confirmation information entering unit 319 of the distribution information generating apparatus 3. The confirmation information entering unit 319 receives the delivery completion information and then registers the information in the history file 336.

Then, the confirmation information entering unit 319 sends e-mail, for example, as a delivery completion notice to the sender in response to the delivery completion notice from the distributor computer 9b (step (11)). The sender receives the completion notice by operating the sending side terminal 5.

Further, the receiver applies for membership through the simplified membership registration as described above by operating the receiving side terminal 7 (step (12)). That is, the URL embedded in the mail of the sending bill as shown in Fig. 43, for example is clicked and the receiving side terminal 5 is caused to access the registration processor 315 of the distribution information generating apparatus 3. The registration processor 315 extracts member information provisionally registered in the member file 335 in response to the access and uses the member information to generate information for the admission screen as shown in Fig. 46 and sends it to the receiving side terminal 7. The receiving side terminal 7 displays the information for the received entering screen. The receiver clicks an admission button after he/she inputs and/or modifies, for example, required information. Thus, information for membership registration is sent from the receiving side terminal 7 to the registration processor 315. The registration processor 315 registers it as membership information in the member file 335.

Accordingly, once the membership registration of the receiver who is a non-member, has completed, the confirmation information entering unit 319 gives new membership points to the sender, and gives new membership points to the receiver (step (13)). That is, new membership points are registered in accordance with the sender, and new membership points are registered for the receiver. In addition, cumulative points of the sender and the cumulative points of the receiver, which are registered in the member file 335, are increased by the points given at this time.

By giving points to the sender and the receiver through the processing flow as described above, application for membership is promoted. Therefore, if schedule information is registered by more people, the possibility for more efficient delivery become higher.

Though not described in detail above, if processing is performed in the distribution information generating apparatus 3, generated information is sequentially registered in the history file 336.

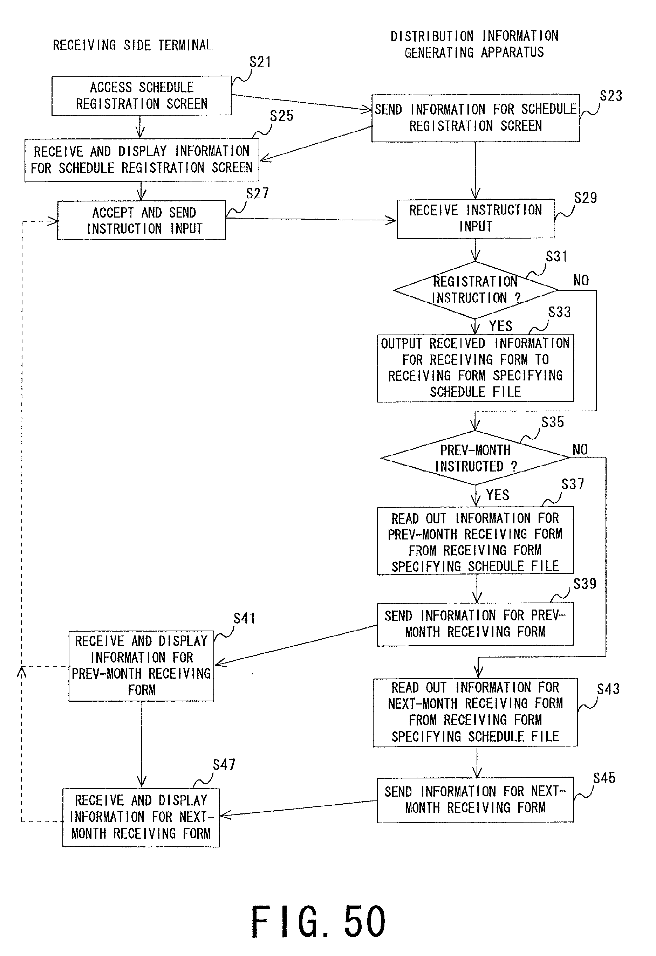

The above-described processing flow is summarized in Fig. 50 and following figures. Fig. 50 shows a processing flow in a case where the schedule registration is performed by using the receiving terminal 7. First of all, when the schedule setting button 351 included in the member information entering screen in Fig. 4, for example is clicked, the receiving side terminal 7 accesses the schedule registration screen (step S21). In response to the access, the registration processor 315 of the distribution information generating apparatus 3 sends information for the schedule registration screen to the receiving side terminal 7 (step S23). The receiving side terminal 7 receives the information for the schedule registration screen from the distribution information generating apparatus 3 and displays the screen as shown in Fig. 7, for example, on the display device (step S25). On the other hand, the receiver sets a form of receiving and clicks the register button or clicks the previous-month button or the next-month button.

Then, the receiving side terminal 7 receives an instruction input from the receiver and sends it to the distribution information generating apparatus 3 (step S27). The registration processor 315 of the distribution information generating apparatus 3 receives the instruction input from the receiving side terminal 7 (step S29), and determines whether the registration instruction was given by clicking the register button (step S31). If it is determined that the registration instruction was given, information on the received form of receiving is output to the receiving form specifying schedule file 333 (step S33).

In addition, if it is not the registration instruction, the registration processor 315 determines whether the "previous-month" is instructed by clicking the "previous-month" button (step S35). If it is determined that the "previous-month" is instructed, the registration processor 315 reads out the information for the receiving form for the previous month from the receiving form specifying schedule file 333 (step S37). Then, the registration processor 315 sends the read previous-month receiving form to the receiving side terminal 7 (step S39). The receiving side terminal 7 receives the information for the previous-month receiving form is received from the registration processor 315 and displays it on the display device (step S41). Then, the processing returns to the step S27.

Further, if the "previous-month" is not instructed, the registration processor 315 determines that the "next-month" is instructed. The registration processor 315 reads out information for the receiving form for the next month from the receiving form specifying schedule file 333 (step S43). Then, the registration processor 315 sends the information for the read next-month receiving form to the receiving side terminal 7 (step S45). The receiving side terminal 7 receives the information for the next-month receiving form is received from the registration processor 315 and displays it on the display device (step S47).

In this way, a receiver can register schedule information with respect to a from of receiving a package addressed to himself/herself.

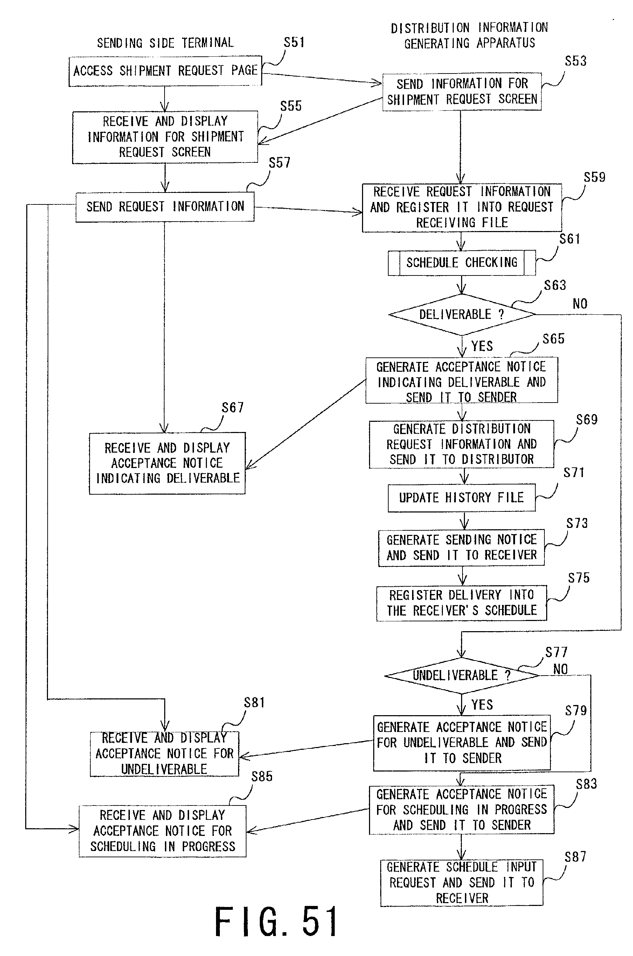

Next, a processing flow in a case where a shipment request from the sending side terminal 5 is processed will be described with reference to Fig. 51. First of all, a sender accesses a shipment request page by operating the sending side terminal 5 (step S51). In response to the access, the request receiver 311 of the distribution information generating apparatus 3 sends information for shipment request screen to the sending side terminal 5 (step S53). The sending side terminal 5 receives the information for the shipment request screen from the distribution information generating apparatus 3 and displays the screen as shown in Fig. 17, for example, on the display device (step S55). The sender enters shipment request information by following the shipment request screen and clicks a request button. Then, the sending side terminal 5 sends the entered request information to the distribution information generating apparatus 3 (step S57). The request receiver 311 of the distribution information generating apparatus 3 receives the request information and registers it in the request receiving file 332.

Then, the schedule checking unit 313 performs schedule checking processing (step S61). The schedule checking processing will be described later. The request receiver 311 receives a processing result from the schedule checking unit 313 and determines whether the processing result of the schedule checking unit 313 indicates "deliverable" (step S63). Incidentally, the "deliverable" includes cases for "available for receiving", "forward", and "keep until called for". If "deliverable", the request receiver 311 generates a acceptance notice indicating "deliverable" and sends it to the sender (step S65). The sender terminal 5 receives and displays the generated acceptance notice indicating "deliverable" (step S67).

Then, the distribution request information generator 317 generates distribution request information. Then, the distribution request information generator 317 registers the distribution request information in the distribution request information file 311 and sends it to the distributor (step S69). The distributor receives distribution request information by the distributor computer 9. Further, the generated distribution request information is used to update the history file 336 (step S71). Further, the request receiver 311 generates a sending notice and sends it to the receiver (step S73). The receiver receives the sending notice from the receiving side terminal 7. Then, if the receiver is a member, "delivery" is registered in a time zone of the delivery schedule on a date of the delivery schedule in a schedule of the member (step S75). Thus, the receiver can check his/her schedule by himself/herself not only from the sending notice but also by accessing to the screen as shown in Fig. 7, for example.

On the other hand, if it is not determined as "deliverable" in step S63, it is determined whether it is undeliverable (step S77). If it is "undeliverable", the request receiver 311 generates an acceptance notice for "undeliverable" and sends it to the sender (step S79), The sender receives the acceptance notice for "undeliverable", by operating the sending side terminal 5 and displays it on the display device (step S81). If information on deliverable dates are included in the acceptance notice for "undeliverable", the processing is moved to a step S65 through a checking screen, for example, in accordance with an instruction by the sender.

Incidentally, the "undeliverable" includes a case for "receiving denial". That is, in the case for "receiving denial", an acceptance bill including a receiving denial message is generated and sent to the sender. The sender receives the acceptance bill mail by operating the sending side terminal 5.

If it is not determined as "undeliverable" in step S77, the schedule is "not fixed". Therefore, the request receiver 311 generates and sends to the sender an acceptance notice for "scheduling in progress" (step S83). The sender operates the sending side terminal 5 to receive and display the acceptance notice for "schedule in progress" (step S85). Incidentally, even when the acceptance notice for "scheduling in progress", the completion of the "scheduling in progress" may not be waited sometimes. In such a case, in accordance with an instruction by the sender, the processing is moved to a step S65 through a checking screen for forced sending, for example. The request receiver 311 generates a schedule input request and sends it to the receiver (step S87). The receiver receives the schedule input request by operating the receiving side terminal 7. Incidentally, the rest of processing moves to the processing in Fig. 50, for example.

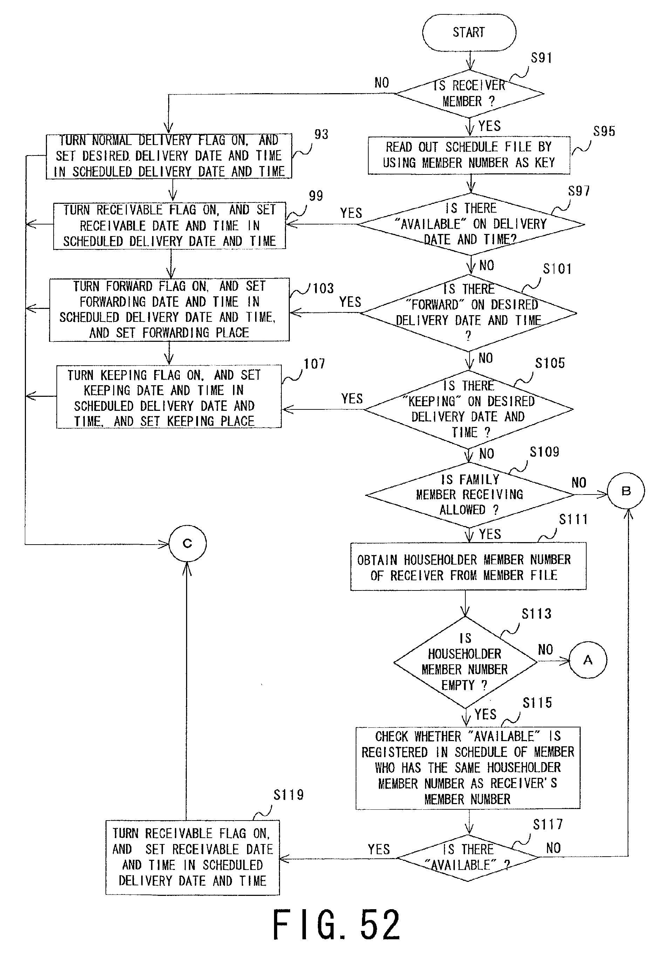

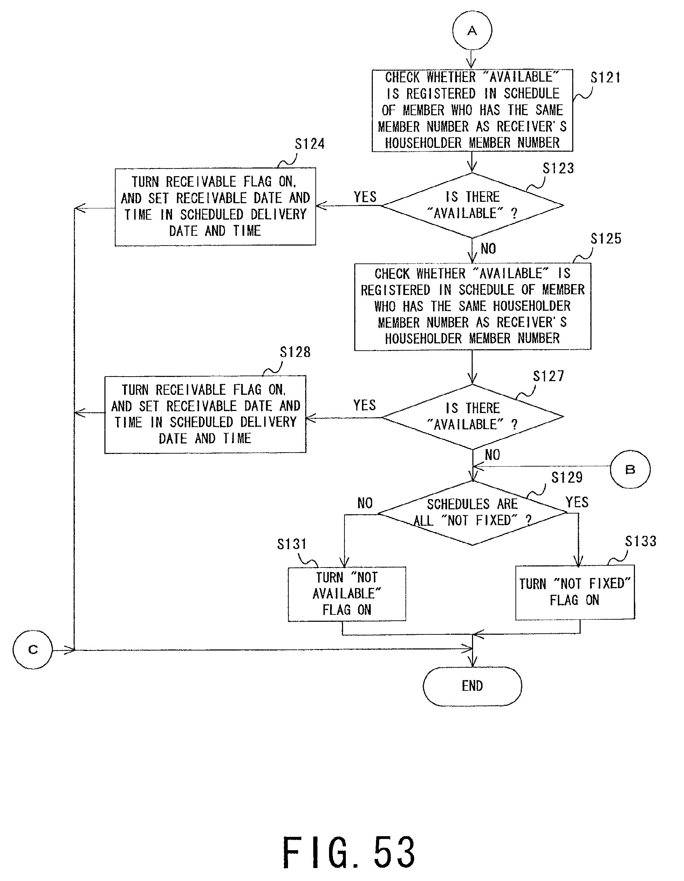

Next, the schedule-checking processing in step S61 in Fig. 51 will be described with reference to Fig. 52 and Fig. 53. First of all, the schedule checking unit 313 determines whether or not a receiver specified by a sender is a member (step S91). That is, it is checked if the receiver is registered in the member file 335. If the receiver is a non-member, a "normal delivery" flag is turned ON in the request receiving file 332 and the desired delivery date and time are set in the scheduled delivery date and time (step S93). Then, the processing is completed through a terminal C.

If the receiver is determined as a member in step S91, the receiving form specifying schedule file 333 is read out by using his/her member number as a key (step S95). Then, it is checked if "available for receiving" is registered on the desired delivery date and time (step S97). If "available for receiving" is registered in the desired delivery time on the desired delivery date, the "available for receiving" flag is turned ON in the request receiving file 332, and the receivable date is set in the scheduled delivery date and time (step S99). If there are a plurality of time-zones with "available for receiving", the first (the earliest) "available for receiving" time-zone, for example, is used as the scheduled delivery date and time. Incidentally, if a condition for receiving denial is met, it is not determined as "available for receiving" even if it is "available for receiving".

If it is determined that "available for receiving does not exist on the desired delivery date and time in step S97, it is determined whether "forward" is registered on the desired delivery date and time (step S101). If "forward" is registered on the desired delivery date and time, a "forward" flag is turned ON in the request receiving file 332. Then, a forwarding date and time are set in a scheduled delivery date and time and a registered forwarding place is set in the member file 335 (step S103). If there are a plurality of time-zones which are registered as "forward", the earliest, for example, time-zone registered as "forward" is set in the scheduled delivery date and time. On the other hand, if it is not determined that "forward" is not registered in step S101, it is determined if "keep until called for" is registered on the desired delivery date and time (step S105). If the "keep until called-for" is registered on the desired delivery date and time, a "keeping" flag is turned ON in the request receiving file 332. Then, a keeping date and time are set in the scheduled delivery date and time and a keeping place registered in the member file 335 is set (step S107).

If it is determined that "keep until called-for" is not registered in step S105, it is determined if "family member receiving is allowed" is specified in the shipment request (step S109). If "family member receiving is allowed" is not specified, the processing is moved to the processing in Fig. 53 through a terminal B. On the other hand, if "family member receiving is allowed" is specified, a householder member number registered in the receiver's member file 335 is obtained (step S111). Then, it is determined if the householder member number is empty in the member file 335 (step S113). If it is empty, it means that the receiver is a householder in this embodiment. If the householder member number field is not empty, the processing is moved to the processing in Fig. 53 through a terminal A.

If the householder member number field is empty in the member file 335, a member having the same householder member number as the receiver's member number is identified with reference to the family setting file 334. Then, it is checked if "available for receiving" is registered in the schedule on the desired delivery date and time of the member with reference to the receiving form specifying schedule file 333 (step S115). If there is no "available for receiving" (step S117: "No" route), the processing is moved to the one in Fig. 53 through the terminal B. On the other hand, "available for receiving" is registered (step S117: "Yes" route), the "available for receiving" flag is turned ON in the request receiving file 332, and the receivable date and time are set in the scheduled delivery date and time (step S119). Then, processing is completed through the terminal C.

The description is moved to the processing flow in Fig. 53 through the terminal A. If the householder member number filed is not empty, that is, if the receiver is living-together family member except for the householder, it is checked with reference to the receiving form specifying schedule file 333 if "available for receiving" is registered in the schedule on the desired delivery date and time of the member having the same member number as the receiver's householder member number (step S121). If the receiver's householder is "available for receiving" (step S123, "Yes" route), a "available for receiving" flag is turned ON in the request receiving file 332, and the receivable date and time are set in the scheduled delivery date and time (step S124). Then, the processing is completed.

On the other hand, if the receiver's householder is "not available for receiving" (step S123: "No" route), it is checked if there is "available for receiving" in the schedule on the desired delivery date and time of the member having the same householder member number as the receiver's householder member number (step S125). If "available for receiving" is registered (step S127: "Yes" route), the "available for receiving" flag is turned ON in the request receiving file 332, and the receivable date and time are set in the scheduled delivery date and time (step S128). Then, the processing is completed.

On the other hand, if the member having the same householder member number as the receiver's householder member number is "not available for receiving" (step S127: "No" route), it is checked whether all the time zone are "not fixed" on the desired delivery date in the receiver's schedule (step S129). If there is "not fixed", an "not fixed" flag is turned ON in the request receiving file 332, and the processing is completed (step S133). On the other hand, all of the schedule is "not available for receiving", a "not available for receiving" flag is turned ON in the request receiving file 332 (step S131). Then, the processing is completed.

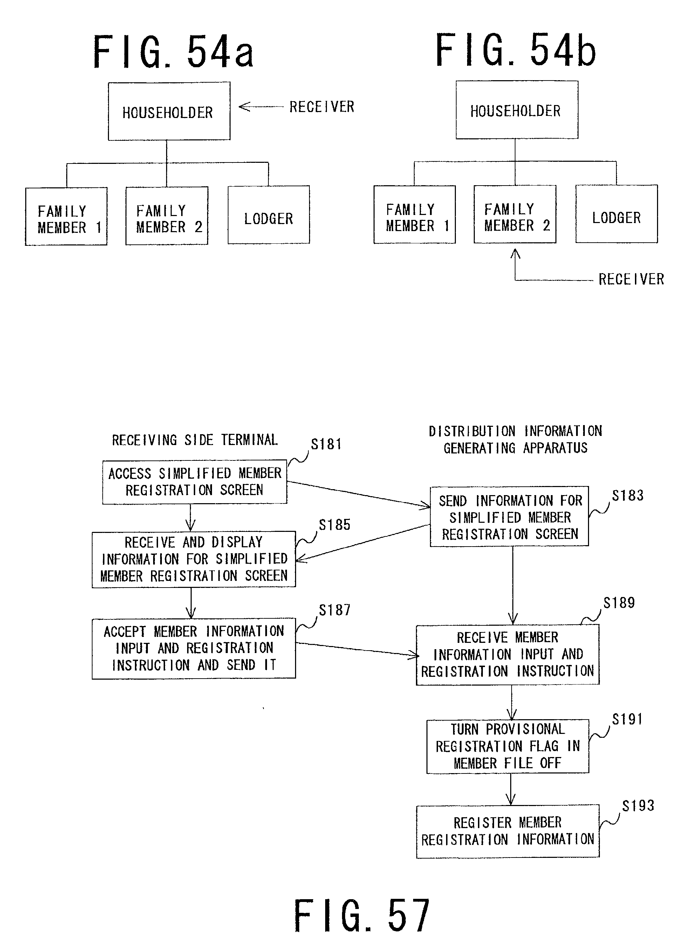

Incidentally, in the processing flows in Fig. 52 and Fig. 53, if the receiver is a householder and is "not available for receiving" on the desired delivery date and time, "available for receiving" is searched with reference to the schedules of "family member 1", "family member 2", and "lodger" in that order as shown in Fig. 54a. If "available for receiving" is not registered for the "family member 1", "family member 2", and the "lodger", it is determined as "not available for receiving". Further, as shown in Fig. 54b, if the receiver is the "family member 2" and is "not available for receiving" on the desired delivery date and time, "available for receiving" is searched with reference to the schedule of the "householder", the "family member 1", and the "lodger" in that order. If "available for receiving is not registered for the "householder", the "family member 1", and the "lodger", it is determined as "not available for receiving".

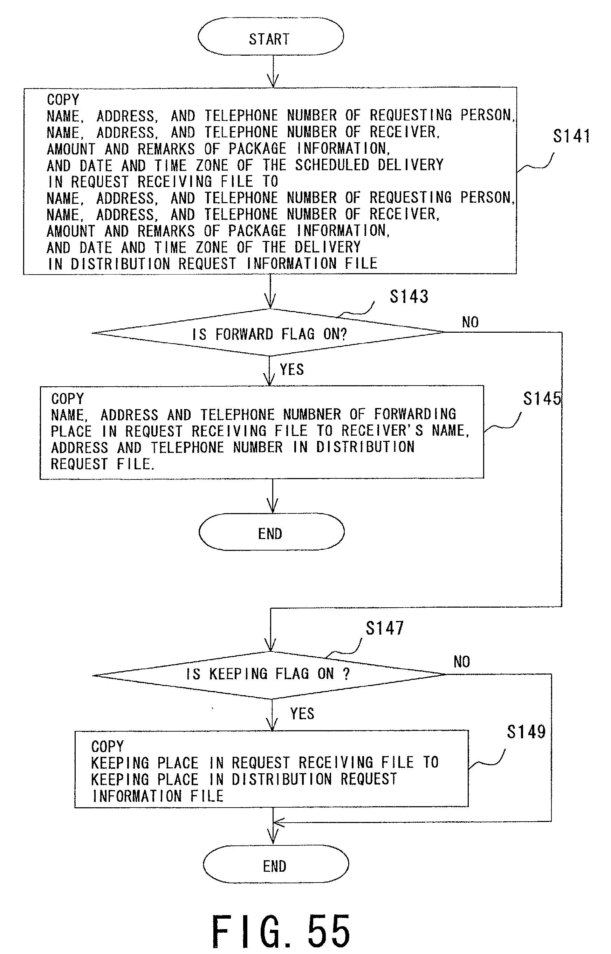

Next, processing for generating distribution request information in step S69 in Fig. 51 is shown in Fig. 55. The distribution request information generator 317 copies requesting person's name, address and telephone number, receiver's name, address, telephone number, an amount and remarks of package information, information on a scheduled delivery date and time-zone in the request receiving file 332 to the requesting person's name, address and telephone number, receiver's name, address, telephone number, an amount and remarks of package information, information on a scheduled delivery date and time-zone in the distribution request information file 331 (step S141). Then, it is determined whether a "forward" flag is turned ON in the request receiving file 332 (step S143).

If the "forward" flag is turned ON, information of name, address and telephone number of the forwarding place in the request receiving file 332 is copied to the receiver's name, address and phone number in the distribution request information file 331 (step S145). Then, the processing is completed.

If the "forward" flag is not turned ON, it is determined whether a "keep until called for" flag is turned ON (step S147). If the "keep until called for" flag is turned ON, information on a keeping place in the request receiving file 322 is copied to "keeping place" in the distribution request information file 331 (step S149). Then, the processing is completed. If the "keep until called-for" flag is not turned ON, the processing is also completed.

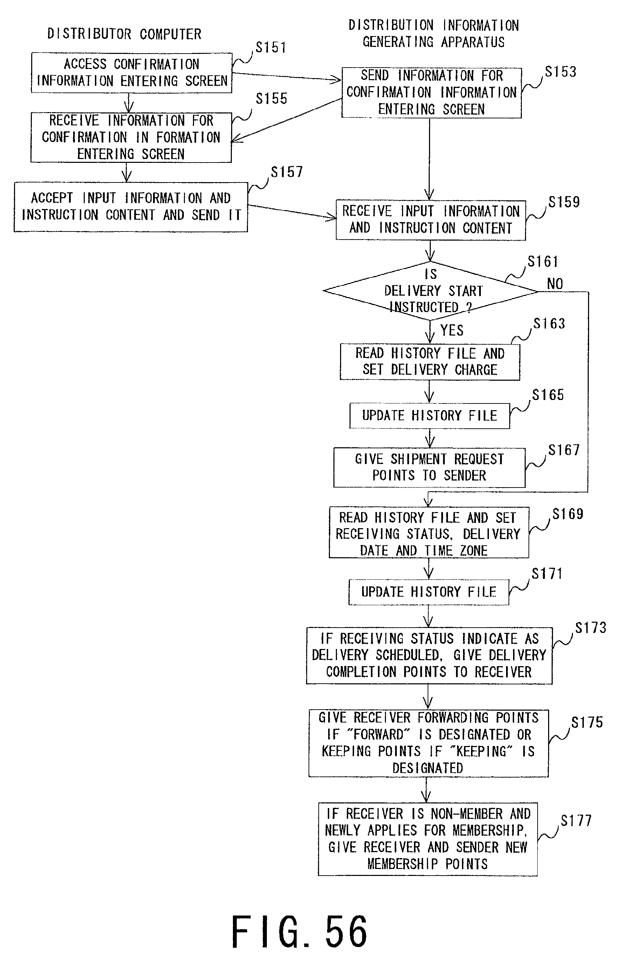

Next, processing by the distributor computer 9 and the confirmation information entering unit 319 will be described with reference to Fig. 56. First of all, the distributor computer 9 accesses a confirmation information entering screen (step S151). In response to the access, the confirmation information entering unit 319 of the distribution information generating apparatus 3 sends the information for the confirmation information entering screen to the distributor computer 9 (step S153). The distributor computer 9 receives the information for confirmation information entering screen and displays the screen as shown in Fig. 23, for example, on the display device (step S155).

The distributor enters required information on the screen. The distributor computer 9 receives entered information and an instruction content and sends them to the distribution information generating apparatus 3 (step S157). The confirmation information entering unit 319 of the distribution information generating apparatus 3 receives the entered information and the instruction content from the distributor computer 9 (step S159) and determines whether it is an instruction for delivery start. If it is the instruction for the delivery start, the history file 336 is read out and received information on the delivery charge is set (step S163). Then, the history file 336 is updated (step S165). Further, shipment request points are given to the sender (step S167). The point file 337 registers the shipment request points for the sender, and a cumulative point value of the sender is increased in the member file 335 by points given at this time.

On the other hand, if it is determined that it is not the instruction for the delivery start, it is an instruction for delivery completion. Therefore, the history file 336 is read out and information on a receiving status, and a delivery date and time-zone is set (step S169). Then, the history file 336 is updated (step S171). Further, if the receiving status indicates "delivery as scheduled", delivery completion points are given to the receiver (step S173). That is, the delivery completion point for the receiver is registered in the point file 337, and a cumulative point value of the receiver is increased in the member file 335 by points given at this time.

Further, forwarding points for "forward" or "keeping" points for "keep until called for" are given to the receiver (step S175). That is, forwarding or keeping points are registered for the receiver, and a cumulative point value of the receiver is increased in the member file 335 by points given at this time. Furthermore, when the receiver is a non-member and applies for membership, new membership points are given to the receiver and the sender (step S177). That is, new membership points are registered for the receiver and the sender, cumulative point values of the sender and the receiver are increased in the member file 335 by points given at this time.

Fig. 57 shows a processing flow for applying for membership when a receiver is a non-member. First of all, when a receiver who is a non-member clicks the URL for new membership in a sending bill mail including a new membership request shown in Fig. 43, the receiving side terminal 7 accesses a simplified member registration screen (step S181). In response to the access, the registration processor 315 extracts member information provisionally registered in the member file 335 and uses the member information to generate information for the simplified member registration screen with reference to the member file 335 and sends it to the receiving side terminal 7 (step S183). The receiving side terminal 7 receives the information for the simplified member registration screen and displays the screen as shown in Fig. 46, for example, on the display device (step S185).

The receiver checks/modifies the entered content and enters payment information, for example. Then, the receiver clicks the admission button. Then, the receiving side terminal 7 receives the member information input and the registration instruction (admission instruction) and sends them to the registration processor 315 (step S187). The registration processor 315 receives the member information input and the registration instruction form the receiving side terminal 7 (step S189), the registration processor 315 turns OFF the "provisional registration" flag in the member file 335 (step S191) and registers the received member registration information in the member file 335 (step S193).

Incidentally, substantially the same processing is performed by omitting step S191 only for not only the new membership application by the receiver who is a non-mender but also general new membership application.

Though one embodiment of the present invention has been described above, the present invention is not limited thereto. For example, the distribution information generating apparatus 3 shown in Fig. 2 may be constructed one or several computers. Modules of the processor 31 in the distribution information generating apparatus 3 is one example and it can be divided in another form. Further, other modules may be added. The file configuration in the data storage device 33 is also one example, and information may be managed in less files or may be managed in more files.

Although the present invention has been described with respect to a specific preferred embodiment thereof, various changes and modifications may be suggested to one skilled in the art.

## Claims

1. A method for processing physical distribution information, said method comprising the steps of:
receiving and registering schedule information regarding a form of receiving of a package addressed to a member from the member;
if a shipment request is received from a sender of a package, determining a delivery form with reference to at least the receiver's schedule information registered in said receiving and registering step if said receiver is a member; and
if said delivery form determined in said determining step involves a movement of said package, generating delivery request information for a distributor in accordance with said delivery form.

2. The method as set forth in claim 1, further comprising a step of:
if said delivery form determined in said determining step involves a movement of the package, registering scheduled delivery information in said receiver's schedule information.

3. The method as set forth in claim 1, further comprising a step of:
sending said distributor information regarding said delivery form determined in said determining step before starting to deliver said package.

4. The method as set forth in claim 1, further comprising a step of:
receiving a delivery completion notice including receiving status data from said distributor.

5. The method as set forth in claim 4, further comprising a step of:
giving a predetermined point to said receiver if said receiving status data included in said delivery completion notice indicates the delivery has been performed by following a delivery schedule specified in said delivery form.

6. The method as set forth in claim 4, further comprising a step of:
giving a predetermined point to said receiver if said delivery form determined in said determining step indicates that delivery to a home of said receiver of said package and said receiving status data included in said delivery completion notice indicates that receiving has been performed by following a delivery schedule specified in said delivery form.

7. The method as set forth in claim 1, further comprising a step of:
receiving and registering information regarding a fixed delivery charge from said distributor after said package is received by said distributor.

8. The method as set forth in claim 1, wherein there is a case where said delivery form is determined as undeliverable in said determining step,

9. The method as set forth in claim 1, further comprising a step of:
sending said sender a notice including information regarding a deliverable date if said delivery form is determined as undeliverable in said determining step.

10. The method as set forth in claim 1, further comprising a step of:
giving a predetermined point to said receiver if said delivery form is determined as forwarding or keeping in said determining step.

11. The method as set forth in claim 1, wherein in said generating step, if said delivery form is determined as forwarding or keeping in said determining step, delivery request information addressed to said distributor is generated by using forwarding destination information or keeping place information registered for said receiver in advance.

12. The method as set forth in claim 1, further comprising a step of:
receiving and registering information of specified member from said member, and
wherein, in said determining step, if said receiver is not available for receiving and said specified member is registered for said receiver, said schedule information for said specified member is referenced.

13. The method as set forth in claim 1, further comprising the steps of:
if a delivery request to a non-member is received from a sender of a package, registering information of said non-member included in said delivery request as provisional member information;
sending a member registration request to said non-member; and
sending information registered as said provisional member information to said non member if membership registration is requested from said non-member.

14. The method as set forth in claim 1, wherein in said receiving and registering step, schedule information regarding a form of receiving said package addressed to said member is received as a predetermined template selection instruction from said member.

15. The method as set forth in claim 1, wherein said determining step comprises a step of sending a schedule input request to said receiver if said receiver's schedule information indicates it is not fixed.

16. The method as set forth in claim 1, wherein said determining step comprises a step of sending said sender a notice indicating scheduling in progress.

17. A method for processing physical distribution request, said method comprising the steps of:
sending a central server a delivery request of a package, said delivery request specifying at least a receiver; and
receiving a result notice of delivery scheduling including a case where it is indicated that said package is undeliverable, from said central server before starting to deliver said package.

18. An apparatus for processing physical distribution information, comprising:
a schedule register, which receives and registers schedule information regarding a form of receiving of a package addressed to a member from a terminal of the member;
a determining unit, which determines a delivery form with reference to at least the receiver's schedule information registered by said schedule register if said receiver is a member, if a shipment request is received from a terminal of a sender of a package; and
a delivery request generator, which generates delivery request information for a distributor in accordance with said delivery form if said delivery form determined by said determining unit involves a movement of said package.

19. The apparatus as set forth in claim 18, further comprising:
a second register, which registers scheduled delivery information in said receiver's schedule information if said delivery form determined by said determining unit involves a movement of the package.

20. The apparatus as set forth in claim 18, further comprising:
a transmitter, which sends said distributor information regarding said delivery form determined by said determining unit before starting to deliver said package.

21. The apparatus as set forth in claim 18, further comprising:
a receiving unit, which receives a delivery completion notice including receiving status data from a computer of said distributor.

22. The apparatus as set forth in claim 21, further comprising:
means for granting a predetermined point to said receiver if said receiving status data included in said delivery completion notice indicates the delivery has been performed by following a delivery schedule specified in said delivery form.

23. The apparatus as set forth in claim 21, further comprising:
means for granting a predetermined point to said receiver if said delivery form determined by said determining unit indicates that delivery to a home of said receiver of said package and said receiving status data included in said delivery completion notice indicates that receiving has been performed by following a delivery schedule specified in said delivery form.

24. The apparatus as set forth in claim 18, further comprising:
a second receiving unit, which receives and registers information regarding a fixed delivery charge from a computer of said distributor after said package is received by said distributor.

25. The apparatus as set forth in claim 18, wherein there is a case where said delivery form is determined as undeliverable by said determining unit.

26. The apparatus as set forth in claim 18, further comprising:
a second transmitter, which sends said sender a notice including information regarding a deliverable date if said delivery form is determined as undeliverable by said determining unit.

27. The apparatus as set forth in claim 18, further comprising:
means for granting a predetermined point to said receiver if said delivery form is determined as forwarding or keeping by said determining unit.

28. The apparatus as set forth in claim 18, wherein, if said delivery form is determined as forwarding or keeping by said determining unit, said delivery request generator generates delivery request information addressed to said distributor by using forwarding destination information or keeping place information registered for said receiver in advance.

29. The apparatus as set forth in claim 18, further comprising:
a third receiving unit, which receives and registers information of specified member from said terminal of said member, and
wherein, if said receiver is not available for receiving and said specified member is registered for said receiver, said determining unit references said schedule information for said specified member.

30. The apparatus as set forth in claim 18, further comprising:
means for registering information of a non-member included in a delivery request to said non-member as provisional member information if said delivery request to said non-member is received from a terminal of a sender of a package;
a third transmitter, which sends a member registration request to said non-member; and
a forth transmitter, which sends information registered as said provisional member information to a terminal of said non-member if membership registration is requested from said terminal of said non-member.

31. The method as set forth in claim 18, wherein said schedule register receives schedule information regarding a form of receiving said package addressed to said member as a predetermined template selection instruction from said terminal of said member.

32. The apparatus as set forth in claim 18, wherein said determining unit comprises a fifth transmitter, which sends a schedule input request to said receiver if said receiver's schedule information indicates it is not fixed.

33. The apparatus as set forth in claim 18, wherein said determining unit comprises a sixth transmitter, which sends said sender a notice indicating scheduling in progress.

34. A computer program which, when run on a computer, causes the computer to carry out a method as claimed in any one of claims 1 to 16.

35. A computer program which, when run on a computer, cause the computer to become an apparatus as claimed in any one of claim 18 to 33.
